# EUROPEAN PATENT SPECIFICATION

(11) **EP 0 473 368 B1**
(45) Date of publication and mention of the grant of the patent: **15.11.1995**
(21) Application number: 91307757.4
(22) Date of filing: 22.08.1991
(51) Int. Cl.: G11B 23/04, G11B 23/08

(54) **Compact size tape cassette**
Kassette in kompakter Form mit Band
Cassette de forme compacte avec bande

(30) Priority: 31.08.1990 JP 229804/90; 29.09.1990 JP 262382/90; 29.09.1990 JP 262383/90; 29.11.1990 JP 331061/90; 22.02.1991 JP 15244/91
(43) Date of publication of application: 04.03.1992
(73) Proprietor: VICTOR COMPANY OF JAPAN, LIMITED, Kanagawa-ku Yokohama (JP)
(72) Inventor: Takahashi, Hitoshi, Ibaraki-Ken (JP); Suzuki, Kazuhiko, Higashiibaraki-gun, Ibaraki-ken (JP)
(74) Representative: Senior, Alan Murray

(56) References cited:
- EP-A- 0 158 169
- EP-A- 0 169 545
- EP-A- 0 228 600

## Description

The present invention relates generally to a compact size tape cassette which is smaller in size than a standard size tape cassette used widely in magnetic recording and/or reproducing apparatus such as home video tape recorders (VTRs) and hence requires an adapter when used in the home video tape recorders. More particularly, this invention relates to a compact size tape cassette having an improved pair of brake mechanisms associated with a supply reel hub and a take-up reel hub, respectively, in interlocked relation to one another to perform a reel hub releasing operation simultaneously and reliably.

As is well known, a standard size tape cassette is used widely in home video tape recorders. There has been developed a compact size tape cassette which is smaller in size than standard size tape cassette and can be recorded and reproduced by the home video tape recorder while the compatibility with the standard size tape cassette is maintained.

The compact size tape cassette can be recorded and reproduced not only by a compact video tape recorder of a construction for exclusive use with the compact size tape cassette, but also by the home video tape recorders of a construction for exclusive use with the standard size tape cassette. In the latter case, however, the compact size tape cassette must be accommodated in a tape cassette adapter having a size identical to the size of the standard size tape cassette.

Aside from the spread of the home video tape recorders, an all-in-one video camera and recorder called a VTR with camera has recently been manufactured. In the VTR with camera, the compact size tape cassette of a smaller size than the standard size tape cassette is used in order to reduce the size and weight of the VTR with camera, thereby improving the portability of the VTR with camera.

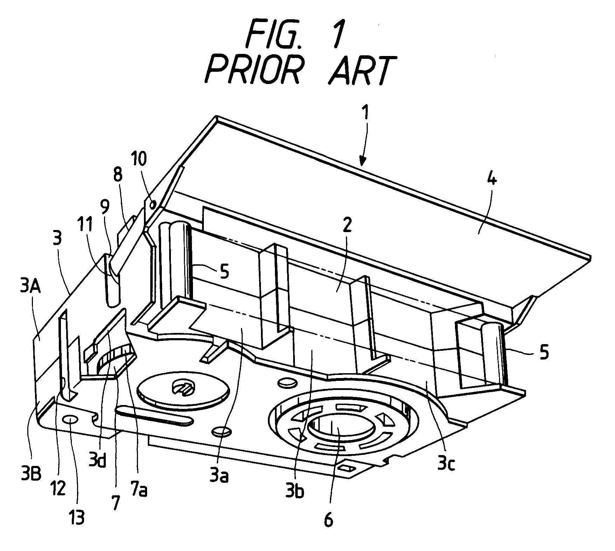

Fig. 1 of the accompanying drawings is a perspective view of a compact size tape cassette 1 shown with its guard panel or lid disposed in the open position.

The compact size tape cassette 1, as shown in Fig. 1, includes a magnetic tape 2 contained in a housing 3 composed of an upper shell 3A and a lower shell 3B assembled together, and a guard panel or lid 4 hinged to opposite side walls of the housing 3 by means of a pair of pins 10 (only one shown) so as to open and close a front opening of the housing 3.

The lower shell 3B has a cutout recess 3d through which a toothed gear 7a formed on a periphery of a lower annular flange of a take-up reel hub 7 faces to the right side wall (left-hand side in Fig. 1) of the housing 3. The recess 3d is defined when the upper and lower shells 3A and 3B are assembled. The housing 3 also has a vertical positioning groove 12 for preventing mis-loading of the compact size tape cassette 1. The positioning groove 12 is formed behind the recess 3d and extends substantially across the height of the upper and lower shells 3A and 3B.

The magnetic tape 2 extends across the front opening of the housing 3 while they are guided around left and right guide rollers 5, 5. The magnetic tape 2 is protected by the lid 4 which is normally disposed in the closed position. The lid 4 is selectively held in the open position and the closed position by means of a slider 8 which is urged forwardly into snapping engagement with a portion of the lid 4 by the force of a plate spring 11 fitted in a U-shaped groove 9 in the right side wall of the housing 3. The housing 3 further has a vertical pin-receiving hole 13 extending upwardly from the bottom of the lower shell 3B for receiving a brake-releasing pin.

When the compact size tape cassette 1 of the foregoing construction is used in a compact video tape recorder (not shown), it is loaded from an opening into the body of the compact video tape recorder until it arrives at a predetermined position in which the lid 4 is pivoted to the substantially horizontal open position such as shown in Fig. 1. Then, the compact size tape cassette 1 is lowered so that a supply reel hub 6 fits with a supply reel disc (not shown) and the toothed gear 7a on the periphery of the lower annular flange of the tape-up reel hub 7 meshes with a drive gear (not shown) of the compact video tape recorder. In this instance, two pairs of vertical and oblique loading pins (not shown) and a capstan (not shown) are received in first, second and third recesses 3a, 3b and 3c, respectively, at the front side of the compact size tape cassette 1.

The compact size tape cassette 1 thus loaded can be recorded and/or reproduced by the compact video tape recorder.

On the other hand, when the compact size tape cassette 1 is used in a home video tape recorder (not shown), it is loaded by using either a tape cassette adapter which, as shown in Japanese Utility Model Publication No. 60-37739, has a size identical to the size of the standard size tape cassette, or a cassette tray on which a standard size tape cassette and a compact size tape cassette are placed.

As described above, the standard size tape cassette and the compact size tape cassette used in the video tape recorders include a housing containing a pair of reel hubs around which a magnetic tape is wound. In the recording and reproducing modes of operation, the magnetic tape wound on the supply reel hub is pulled out from the front opening of the housing, then travels along a magnetic head of the video tape recorder, subsequently returns from the front opening into the housing, and finally is wound on the take-up reel hub. In the rewinding mode of operation, the magnetic tape is fed directly from the take-up reel hub to the supply reel hub.

Each of the supply reel hub and the take-up reel hub is provided with a brake mechanism which is operative to prevent the corresponding reel hub from rotating accidentally. When the housing is subjected to an impact force or shock during transportation or handling of the tape cassette, the supply reel hub or the take-up reel hub tends to turn accidentally, thereby placing the magnetic tape into a slackened condition which will cause various deficiencies such as uneven rotation of the reel hubs, folding of the magnetic tape, and rupturing of the magnetic tape. These deficiencies can be overcome by the brake mechanism associated with the reel hubs.

Fig. 2 is a perspective view of the compact size tape cassette, with the upper shell and a part of the magnetic tape omitted for clarity.

As shown in Fig. 2, the supply reel hub 6 and the take-up reel hub 7 are received in the lower shell 3B with the magnetic tape wound around the reel hubs 6, 7. The supply reel hub 6 and the take-up reel hub 7 are provided with the corresponding ones of the brake mechanisms. The lower shell 3B includes a take-up reel stopper 14 which is cooperative with the toothed gear 7a in performing a braking operation.

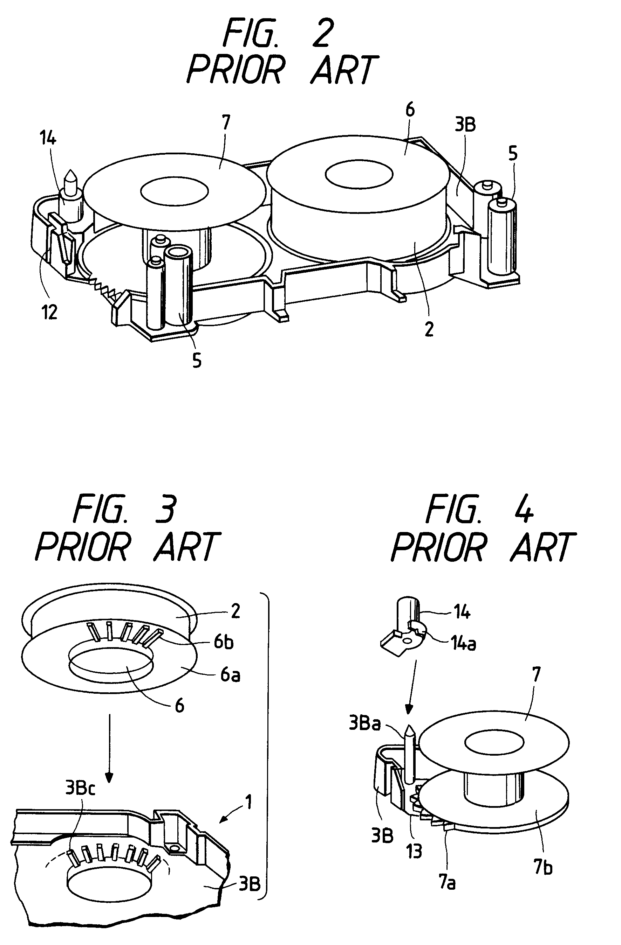

The brake mechanism associated with the supply reel hub 6 includes, as shown in Fig. 3, a plurality of circumferentially spaced radial ribs 6b disposed on an under surface of a lower annular flange 6a of the supply reel hub 6, and a plurality of circumferentially spaced radial ribs 3Bc disposed on an inside surface of the lower shell 3B in confronting relation to the radial ribs 6b. The ribs 6b and the ribs 3Bc have a trapezoidal cross-section. In the assembled condition shown in Fig. 1, the supply reel hub 6 is urged downwardly toward the inside surface of the lower shell 3B by means of a reel spring (not shown) fixedly mounted on the inside surface of the upper shell 3A. In this instance, the ribs 6b on the supply reel hub 6 mesh with ribs 3Bc on the lower shell 3B to provide a braking effect on the supply reel hub 6 so that the supply reel hub 6 is normally locked in position against rotation relative to the lower shell 3B.

Thus, the brake mechanism associated with the supply reel hub 6 is composed of the plural ribs 6b and the plural ribs 3Bc.

This brake mechanism is released when, after the compact size tape cassette is loaded in a video tape recorder, a supply reel spindle of the video tape recorder or of the tape cassette adapter is inserted into the supply reel hub 6 from the bottom thereof and lifts up the supply reel hub 6 from the inside surface of the lower shell 3B, thereby disengaging the ribs 6b and the ribs 3Bc.

The brake mechanism associated with the take-up reel hub 7 includes, as shown in Fig. 4, a plurality of downwardly facing triangular teeth 14a disposed on a lower part of the take-up reel stopper 14 rotatably mounted on a support shaft or pin 3Ba upstanding from a portion of the inside surface of the lower shell 3B adjacent to the take-up reel hub 7. The teeth 14a are disposed in confronting relation to a portion of the toothed gear 7a on the periphery of the lower annular flange 7b of the take-up reel hub 7. The teeth 14a on the take-up reel stopper 14 are urged by a spring (not shown) into meshing engagement with the toothed gear 7a on the take-up reel hub 7 to provide a braking effect on the take-up reel hub 7 so that the take-up reel hub 7 is normally locked in position against rotation relative to the lower shell 3B.

Thus, the brake mechanism associated with the take-up reel hub 7 is composed of the non-illustrated spring, the triangular teeth 14a and the toothed gear 7a.

This brake mechanism is released when, after the compact size tape cassette is loaded in a video tape recorder, a brake-releasing pin (not shown) of the video tape recorder is inserted into the pin-receiving hole 13 in the lower shell 3B from the bottom thereof and lifts up the take-up reel stopper 14 from the inside surface of the lower shell 3B, thereby disengaging the teeth 14a on the take-up reel stopper 14 and the teethed gear 7a on the take-up reel hub 7.

With the spread of the VTR with camera, there has been a keen demand for a compact size tape cassette which is capable of withstanding frequent transportation and enables a long shooting time.

To cope with this demand, it is desired that the compact size tape cassette contains a magnetic tape having a base film thinner than that of the conventional magnetic tape and is so constructed as to protect the thinner magnetic tape against damage even when subjected to an impact force or shock.

However, since the braking operation of the brake mechanisms, which are associated with the supply and take-up reel hubs 6, 7 of the conventional compact size tape cassette 1 shown in Figs. 1 through 4, relies on the force of the springs, the reel hubs 6, 7 are likely to turn against the force of the springs when an external shock is imparted on the compact size tape cassette 1.

In addition, the conventional brake mechanisms are unable to retain the magnetic tape 2 within the housing 3 when the magnetic tape 2 is pulled out while the lid 4 is being manually opened.

EP-A-0,169,545 discloses a tape cassette having the features of the preamble of claim 1.

According to the present invention there is provided a compact size tape cassette including a housing, first and second reel hubs rotatably mounted within the housing, with a magnetic tape wound therearound, and rotatably mounted first and second brake mechanisms associated with said first and second reel hubs, respectively, for locking said first and second reel hubs in position against rotation relative to said housing when said first and second brake mechanisms are in braking positions; characterised in that
said first brake mechanism has a driving portion and said second brake mechanism has a driven portion, spaced from said driving portion by at least a predetermined distance when said first and second brake mechanisms are in said braking positions, and that
when said first brake mechanism is released, said driving portion is moved across said predetermined distance into abutment with said driven portion so as to displace said driven portion to release said second brake mechanism.

The first reel hub may be a take-up reel hub and the second a supply reel hub.

According to a preferred embodiment, the first locking pawl is shaped such that rotation of the take-up reel hub in one direction such as to loosen the magnetic tape is prevented while permitting rotation of the take-up reel hub in the opposite direction such as to wind the magnetic tape on the take-up reel hub. The second locking pawl is shaped such that rotation of the supply reel hub in one direction such as to loosen the magnetic tape is prevented while permitting rotation of the supply reel hub in the opposite direction such as to wind the magnetic tape on the supply reel hub, the magnetic tape being held under tension between the supply reel hub and the take-up reel hub.

The take-up reel hub further has a second annular flange spaced from the first-mentioned annular flange. The first brake mechanism may further include an abutment normally spaced from a periphery of the second annular flange by a clearance and engageable with the periphery of the second annular flange to prevent the first locking pawl from moving into a space between the second annular flange and the first-mentioned annular flange of the take-up reel hub. The second brake mechanism may include a similar abutment.

The brake-releasing element may comprise an external brake-releasing pin movable in a direction parallel to an axis of rotation of the bake arm, and a release lever movably mounted within the housing for transmitting movement of the brake-releasing pin to the first engagement portion of the brake arm for causing the brake arm to turn in the second direction.

According to a preferred embodiment, one of the housing and the brake arm has a brake arm stopper for limiting angular movement of the brake arm in the first direction to keep the brake arm out of contact with a reel shaft on which the take-up reel hub is rotatably mounted.

The second brake mechanism may further include a cam means associated with the brake member and engageable with a portion of the supply reel hub to turn the brake member in the first direction for temporarily releasing the supply reel hub when the supply reel hub is lifted.

The first and second brake mechanisms are spaced from one another by a predetermined distance when they are disposed in a braking position relative to the take-up reel hub and the supply reel hub. The first brake mechanism, as it performs its releasing operation, is engageable with the brake mechanism to cause the releasing operation of the second brake mechanism.

Embodiments of the present invention can provide a compact size tape cassette having brake mechanisms which are capable of locking supply and take-up reel hubs in position against accidental rotation even when the compact size tape cassette is subjected to an impact force or shock.

The present invention can also provide a compact size tape cassette including brake mechanisms which are capable of preventing undesired withdrawal of the magnetic tape which would otherwise occur when the magnetic tape is pulled while a protective panel or lid is being manually opened.

Further, this invention can provide a compact size tape cassette including a safety means incorporated in at least one of a pair of brake mechanisms for preventing a locking pawl of the brake mechanism from moving into a space between opposite annular flanges of the corresponding reel hub, thereby protecting the magnetic tape against damage caused due to engagement with the locking pawl.

This invention can provide a compact size tape cassette having structural features incorporated in brake mechanism for enabling an automated assembling of the tape cassette.

Still further, this invention can provide a compact size tape cassette which is capable of loading in a compact video tape recorder or a tape cassette adapter even when a supply reel hub is displaced toward a take-up reel hub due to over-tensioning of the magnetic tape.

The above and other aims, features and advantages of the present invention will become more apparent from the following description when making reference to the detailed description and the accompanying sheets of drawings in which preferred structural embodiments incorporating the principles of the present invention are shown by way of illustrative examples.
Fig. 1 is a perspective view of a conventional compact size tape cassette shown with a lid in the open position;
Fig. 2 is a perspective view of the compact size tape cassette, with an upper shell and a part of a magnetic tape omitted for clarity;
Fig. 3 is an exploded fragmentary perspective view showing a brake mechanism associated with a supply reel hub of the conventional compact size tape cassette;
Fig. 4 is an exploded fragmentary perspective view showing a brake mechanism associated with a take-up reel hub of the conventional compact size tape cassette;
Fig. 5 is a fragmentary schematic perspective view of a main portion of a compact size tape cassette, with an upper shell omitted for clarity, described for reference purposes;
Fig. 6 is a perspective view showing a first brake mechanism associated with a take-up reel hub of the compact size tape cassette shown in Fig. 5;
Fig. 7 is an enlarged plan view of a portion of the first brake mechanism;
Fig. 8 is a plan view showing a second brake mechanism associated with a supply reel hub of the compact size tape cassette shown in Fig. 5;
Fig. 9 is a schematic perspective view showing a safety means incorporated in the brake mechanism associated with the supply reel hub;
Fig. 10 is a plan view of Fig. 9 with parts cutaway for clarity;
Fig. 11 is a schematic perspective view showing a safety means incorporated in the brake mechanism associated with the take-up reel hub;
Fig. 12 is a plan view of Fig. 11 with parts cut-away for clarity;
Figs. 13 through 15 are schematic perspective views illustrative of a problem associated with the brake mechanisms devoid of the safety means;
Fig. 16 is a fragmentary diagrammatical plan view showing an arrangement of the brake mechanisms according to the invention;
Fig. 17 is a perspective view showing an inspection and correction enabling means associated with a brake member;
Figs. 18(a) and 18(b) are perspective views showing preferred forms of a spring retainer;
Fig. 19 is a fragmentary perspective view showing a release lever associated with a brake arm for turning the same;
Fig. 20 is a fragmentary plan view of a compact size tape cassette illustrative of the operation of a brake arm stopper;
Fig. 21 is a view similar to Fig. 20, but showing a problem associated with a compact size tape cassette devoid of the brake arm stopper;
Fig. 22 is a perspective view of a brake member having a cam means for temporarily displacing the brake member into a releasing position;
Fig. 23 is a diagrammatical side view illustrative of the operation of the cam means;
Fig. 24 is a view similar to Fig. 22, but showing a modified cam means;
Fig. 25 is a diagrammatical side view illustrative of the operation of the modified cam means;
Fig. 26 is a view similar to Fig. 22, but showing another modified cam means; and
Figs. 27 and 28 are diagrammatical plan views illustrative of the manner in which the cam means shown in Fig. 26 operates.

The present invention will be described in greater detail with reference to certain preferred embodiments shown in the accompanying drawings in which like reference characters designate like or corresponding parts throughout the several views.

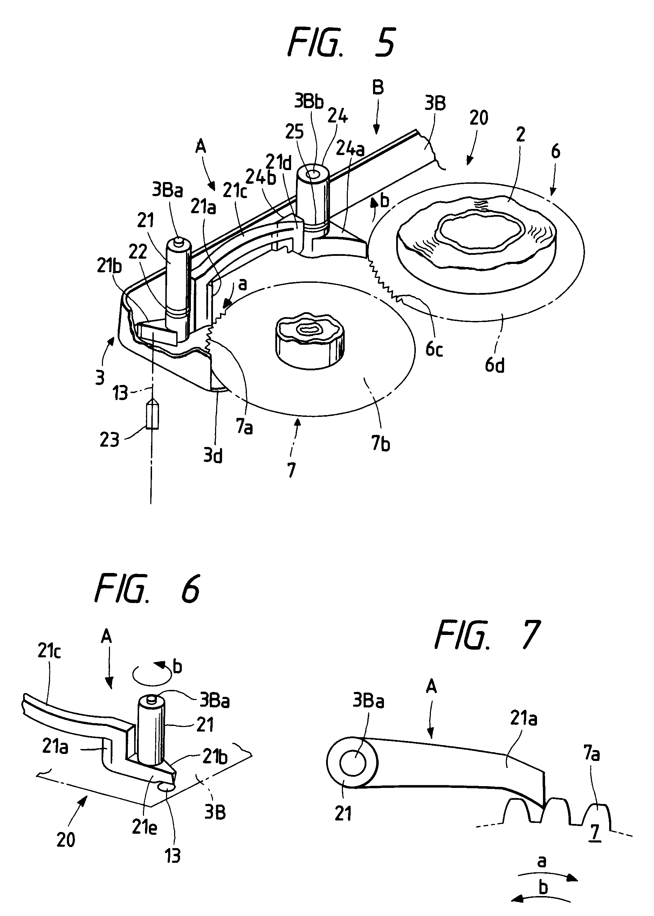

Figs. 5 through 8 show a compact size tape cassette 20 described for reference purposes. These parts of the compact size tape cassette 20 which are structurally the same as those of the compact size tape cassette 1 shown in Figs. 1 - 4 are designated by the same reference characters, and a further description about these parts is no longer needed.

The compact size tape cassette 20 includes a supply reel hub 6 and a take-up reel hub 7 winding therearound a magnetic tape 2, and first and second brake mechanisms A and B associated with the take-up reel hub 7 and the supply reel hub 6, respectively, for locking them in position against rotation. The first and second brake mechanisms A, B are interlocked such that a releasing operation of the first brake mechanism A is transmitted to the second brake mechanism B to cause a releasing operation of the second brake mechanism B in synchronism with the releasing operation of the first brake mechanism A.

The compact size tape cassette 20 is different from the conventional compact size tape cassette 1 shown in Fig. 1 in that the take-up reel stopper 14 is removed and the first and second brake mechanisms A, B are added. Aside from the brake mechanisms A, B, the compact size tape cassette 20 further has a housing 3 composed of an upper shell (not shown but substantially identical to the upper shell 3A shown in Fig. 1) and a lower shell 3B, first and second support shafts 3Ba and 3Bb upstanding from an inside surface of the lower shell 3B, a cutout recess 3d formed in the lower shell 3B, and a vertical pin-receiving hole 13 receptive of a brake-releasing pin 23 of the video tape recorder. Though not shown, the compact size tape cassette 20 also includes three recesses identical to the recesses 3a - 3c shown in Fig. 1, a protective panel or lid identical to the lid 4 shown in Fig. 1, guide rollers identical to the guide rollers 5 shown in Fig. 1, a slider identical to the slider 8 shown in Fig. 1, a U-shaped groove identical to the U-shaped groove 9 shown in Fig. 1, pins identical to the pins 10 shown in Fig. 1, a plate spring 11 shown in Fig. 1, and a vertical positioning groove identical to the vertical positioning groove 12 shown in Fig. 1.

The supply reel hub 6 has a toothed gear 6c formed on a periphery of a lower annular flange 6d of the reel hub 6. The take-up reel hub 7 has a toothed gear 7a formed on the periphery of a lower annular flange 7b of the reel hub 7.

The first brake mechanism A associated with the take-up reel hub 7 is composed of a brake arm 21 and a spring 22.

As shown in Figs. 5 and 6, the brake arm 21 is rotatably mounted on the first support shaft 3Ba upstanding from the inside surface of the lower shell 3B at a position adjacent to the take-up reel hub 7. The spring 22 is a torsion coil spring loosely fitted around a cylindrical body of the brake arm 21 and acts on the brake arm for urging the brake arm 21 to turn in a direction indicated by the arrow a in Fig. 5.

The brake arm 21 includes a locking pawl 21a normally held in mesh with the toothed gear 7a of the take-up reel hub 7 by the force of the spring 22 tending to turn the brake arm 21 in the direction of the arrow *a*, a pin engagement portion 21b engageable with a brake-releasing pin 23 of a video tape recorder and urged by the pin 23 in a direction indicated by the arrow *b* (Fig. 6) to turn the brake arm 21 in that direction about the support shaft 3Ba, and an arm 21c having an actuating pin 21d (Fig. 5) on its distal end for transmitting the movement of the locking pawl 21a to the second brake mechanism B (and an engagement portion of a brake member, in particular). The pin engagement portion 21b has an oblique side wall 21e (Fig. 6) engageable with the brake-releasing pin 23.

The support shaft 3Ba upstanding from the inside surface of the lower shell 3B is located in a plane extending substantially in tangential relation to the periphery of the toothed gear 7a of the take-up reel hub 7, as shown in Fig. 7. With this location of the support shaft 3Ba, by properly selecting the shape of the locking pawl 21a of the brake arm 21 journaled on the support shaft 3Ba, rotation of the take-up reel hub 7 in the direction of the arrow *b* (in a direction to slacken the magnetic tape 2 wound on the take-up reel hub 7) can normally be prevented while permitting rotation of the take-up reel hub 7 in the direction of the arrow *a* (in a direction to take-up the magnetic tape 2 on the take-up reel hub 7). Thus, a segment of the magnetic tape 2 extending between the take-up reel hub 7 and the supply reel hub 6 is held under tension.

A releasing operation of the first brake mechanism A is performed in a manner described below. After the compact size tape cassette 20 is loaded in the video tape recorder, the brake-releasing pin 23 of the video tape recorder is inserted into the vertical pin-receiving hole 13 (Fig. 6) of the lower shell 3B from the bottom thereof. The brake-releasing pin 23, as it moves upwardly, first engages the oblique side wall 21e of the pin engagement portion 21b of the brake arm 21 and subsequently urges the pin engagement portion 21 in the direction of the arrow *b*, thereby causing the brake arm 21 to turn in the same direction about the support shaft 3Ba against the force of the spring 22. The angular movement of the brake arm 21 in the direction of the arrow *b* causes the locking pawl 21a to release the toothed gear 7a on the take-up reel hub 7. The oblique side wall 21e of the pin engagement portion 21b is not restrictive but illustrative and, therefore, a side wall of a different shape may be employed depending on the shape of the pin engagement portion 21b.

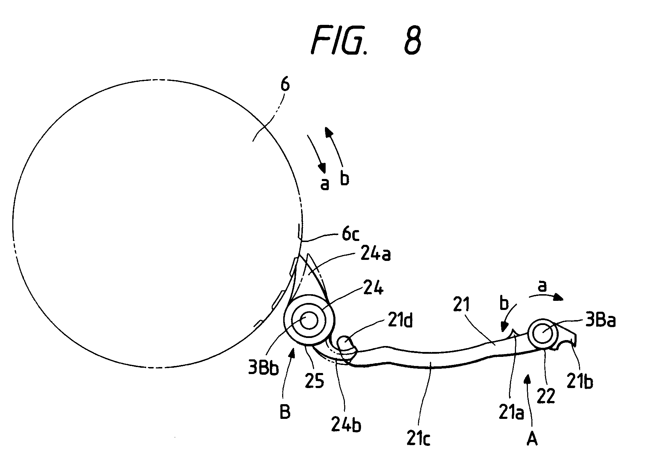

As shown in Figs. 5 and 8, the second brake mechanism B associated with the supply reel hub 6 is composed of a brake member 24 and a spring 25.

The brake member 24 is rotatably mounted on the second support shaft 3Bb upstanding from the inside surface of the lower shell 3B at a position adjacent to the supply reel hub 6. The spring 25 is a torsion coil spring loosely fitted around a cylindrical body of the brake member 25 and acts on the brake member 24 for urging the brake member 24 to turn in a direction indicated by the arrow *b* in Fig. 5.

The brake member 24 includes a locking pawl 24a normally held in mesh with the toothed gear 6c of the supply reel hub 6 by the force of the spring 25 tending to turn the brake member 24 in the direction of the arrow *b*, and a pin engagement portion 24b held in engagement with the actuating pin 21d of the first brake mechanism A and urged by the actuating pin 21d in a direction indicated by the arrow *a* (Fig. 8) to turn the brake member 24 in that direction about the support shaft 3Bb.

The pin engagement portion 24b of the brake member 24 which is engaged by the actuating pin 21d is normally urged in the direction of the arrow *a* by the force of the spring 25. However, the force of the spring 25 can readily be overcome by the angular movement of the brake arm 21 in the direction of the arrow *b* which is transmitted to the brake member 24 via the actuating pin 21d. Thus, the locking pawl 24a and the brake member 24 can readily be turned in the direction of the arrow *a*.

The support shaft 3Bb upstanding from the inside surface of the lower shell 3B is located in a plane extending substantially in tangential relation to the periphery of the toothed gear 6c of the supply reel hub 6, as shown in Fig. 8. With this location of the support shaft 3Bb, by properly selecting the shape of the locking pawl 21a of the brake arm 21 journaled on the support shaft 3Ba, rotation of the supply reel hub 6 in the direction of the arrow *a* (in a direction to slacken the magnetic tape 2 wound on the supply reel hub 6) can normally be prevented while permitting rotation of the supply reel hub 6 in the direction of the arrow *b* (in a direction to wind up the magnetic tape 2 on the supply reel hub 6). Thus, a segment of the magnetic tape 2 extending between the take-up reel hub 7 and the supply reel hub 6 is normally tensioned in an adequate manner.

Since the first and second brake mechanisms A and b are interlocked with each other through an engagement between the actuating pin 21d and the pin engagement portion 24b, a releasing operation of the second brake mechanism B takes place in synchronism with the releasing operation of the first brake mechanism A.

More specifically, after the compact size tape cassette 20 is loaded in the video tape recorder, the brake-releasing pin 23 (Fig. 5) of the video tape recorder is inserted into the vertical pin-receiving hole 13 of the lower shell 3B from the bottom thereof. During upward movement of the brake-releasing pin 23, the brake-releasing pin 23 first engages the oblique side wall 21e of the pin engagement portion 21b of the first brake mechanism A and subsequently urges the pin engagement portion 21 in the direction of the arrow *b*, thereby turning the brake arm 21 in that direction about the support shaft 3Ba against the force of the spring 22. Thus, the locking pawl 21a of the brake arm 21 is released from the toothed gear 7a on the take-up reel hub 7. At the same time, the angular movement of the locking pawl 21a of the brake arm 21 in the direction of the arrow *b* is transmitted to the pin engagement portion 24b of the brake member 24 via the actuating pin 21d which is disposed on the distal end of the arm 21c and held in engagement with the pin engagement portion 24b. Thus, the pin engagement portion 24b is urged by the actuating pin 21d in the direction of the arrow *a*, so that the brake member 24 turns in the direction of the arrow *a* about the support shaft 3Bb against the force of the spring 25. The angular movement of the brake member 24 in this direction disengages the locking pawl 24a from the toothed gear 6c on the supply reel hub 6, as indicated by the phantom lines in Fig. 8.

As described above, the releasing operation of the second brake mechanism B (which is accomplished by disengagement between the locking pawl 24a of the brake member 24 and the toothed gear 6c of the supply reel hub 6) takes place in synchronism with the releasing operation of the first brake mechanism A (which is accomplished by disengagement between the locking pawl 21a of the brake arm 21 and the toothed gear 7a of the take-up reel hub 7). With the first and second brake mechanisms A, B thus interlocked, the supply reel hub 6 and the take-up reel hub 7 can be locked and released reliably and accurately. Preferably, the supply and take-up reel hubs 6, 7 are permitted to rotate in a direction such as to wind the magnetic tape 2 on the respective reel hubs 6, 7, so that a segment of the magnetic tape 2 extending between the reel hubs 6, 7 is held under tension. With the magnetic tape 2 thus tensioned, it is no longer possible to withdraw the magnetic tape 2 from the housing 3 even when the magnetic tape 2 is pulled while the lid is being manually opened. The first and second brake mechanisms A and B firmly lock the take-up reel hub 7 and the supply reel 6 in position against accidental rotation even when the compact size tape cassette 20 is subjected to an impact force or shock.

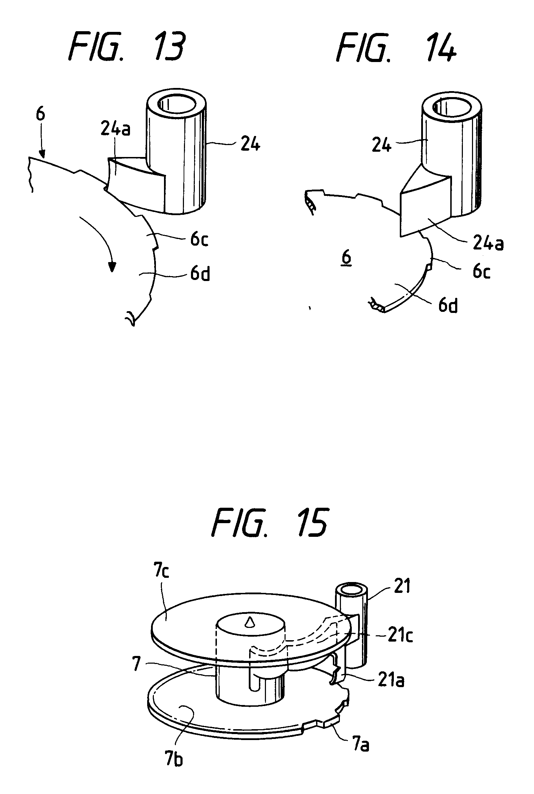

At least one of the brake mechanisms A and B may further include a safety means for protecting the magnetic tape 2 against damage which would otherwise be caused when the locking pawl 21a or 24a is displaced into a space between opposite annular flanges of the reel hub 6 or 7. More specifically, when the compact size tape cassette comes bump on the floor due to an error caused by an operator during assembling operation or caused by the user during use, one or both of the locking pawls 21a, 24a are likely to disengage from the mating toothed gears 7a, 6c of the reel hubs 7, 6. If such disengagement once occurs, the springs 22, 25 displace the brake arm 21 and the brake member 24 toward the respective reel hubs 7, 6, thereby moving the locking pawls 21a, 24a into spaces between opposite annular flanges of the respective reel hubs 7, 6, as seen from Figs. 14 and 15. In this instance, the locking pawls 21a, 24a impinge upon the magnetic tape 2 (see Fig. 5) wound on the reel hubs 7, 6 and hence damage the magnetic tape 2 itself or at least the data recorded on the magnetic tape 2.

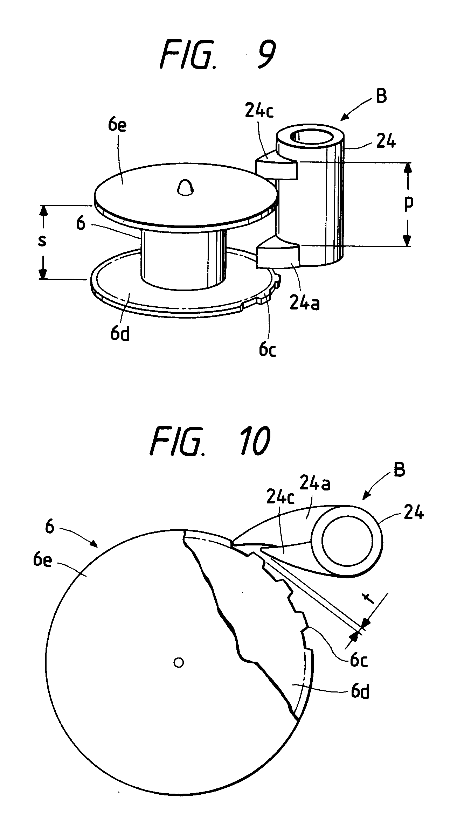

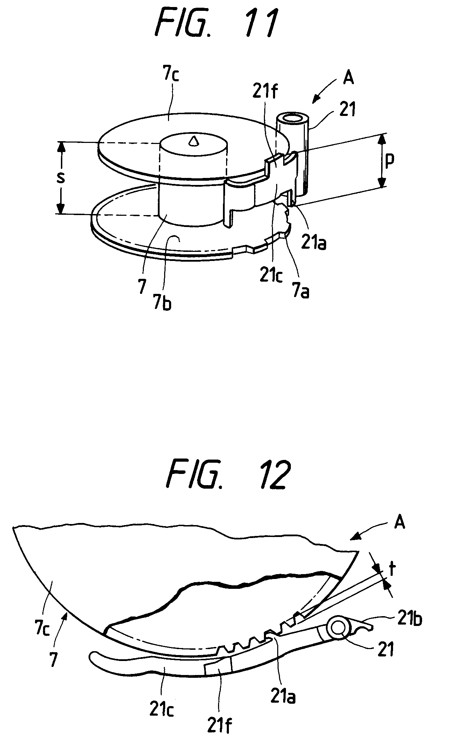

In order to protect the magnetic tape 2 from damages caused due to engagement with the locking pawls 21a, 24a, the brake mechanisms A and B further have abutments or projections 21f and 24c which serve as the above-mentioned safety means. As shown in Fig. 9, the abutment 24c of the brake mechanism B is formed on the brake member 24 and vertically spaced from the locking pawl 24a by a pitch *p* which is equal to the distance or spacing *s* between the upper and lower annular flanges 6e, 6d of the supply reel hub 6. The abutment 24c is normally spaced from a periphery of the upper annular flange 6e by a small gap or clearance *t*, as shown in Fig. 10. Likewise, the abutment 21f of the brake mechanism A is formed on the brake arm 21 and vertically spaced from the locking pawl 21a by a pitch *p* which is equal to the distance or spacing *s* between the upper and lower annular flanges 7c, 7b of the take-up reel hub 7, as shown in Fig. 11. The abutment 21f is normally spaced from a periphery of the upper annular flange 7c by a small gap or clearance *t*, as shown in Fig. 12. The abutments 24c and 24c are engageable with the peripheries of the upper annular flanges 6c, 7c of the respective reel hubs 6, 7 to prevent the locking pawls 24a, 21a from moving into the space between the upper and lower annular flanges 6e and 6d; 7c and 7b of the reel hubs 7, 6 when the compact size tape cassette is subjected to an undue shock, for instance, when the tape cassette comes bump by accident on the floor during assembling operation or during the use of the tape cassette.

As shown in Fig. 9, the locking pawl 24a of the brake mechanism B may ride on the lower annular flange 6d of the supply reel hub 6 and slightly project into the space between the upper and lower annular flanges 6e, 6d of the supply reel hub 6 when the compact tape cassette comes bump on the floor. However, the advancing movement of the locking pawl 24a is prohibited when the abutment 24c engages the periphery of the upper annular flange 6e. In order to provide a reliable braking operation and avoid an objectionable intrusion of the pawl 24a into the space between the upper and lower annular flanges 6e, 6d of the supply reel 6, the clearance *t* (Fig. 10) between the periphery of the upper annular flange 6e and the abutment 24c may range from 0.5 to 2 mm, preferably from 1 to 1.5 mm. The shape of the abutment 24c shown in the illustrated embodiment is not restrictive but illustrative.

As shown in Fig. 11, the locking pawl 21a of the brake mechanism A may ride on the lower annular flange 7b of the take-up reel hub 7 and slightly project into the space between the upper and lower annular flanges 7c, 7b of the take-up reel hub 7 when the compact tape cassette comes bump on the floor. However, the advancing movement of the locking pawl 21a is prohibited when the abutment 21f engages the periphery of the upper annular flange 7c. In order to provide a reliable braking operation and avoid an objectionable intrusion of the pawl 21a into the space between the upper and lower annular flanges 7c, 7b of the take-up reel 7, the clearance *t* (Fig. 12) between the periphery of the upper annular flange 6e and the abutment 21f may range from 0.5 to 2 mm, preferably from 1 to 1.5 mm. The shape of the abutment 21f is not limited to that of the illustrated embodiment.

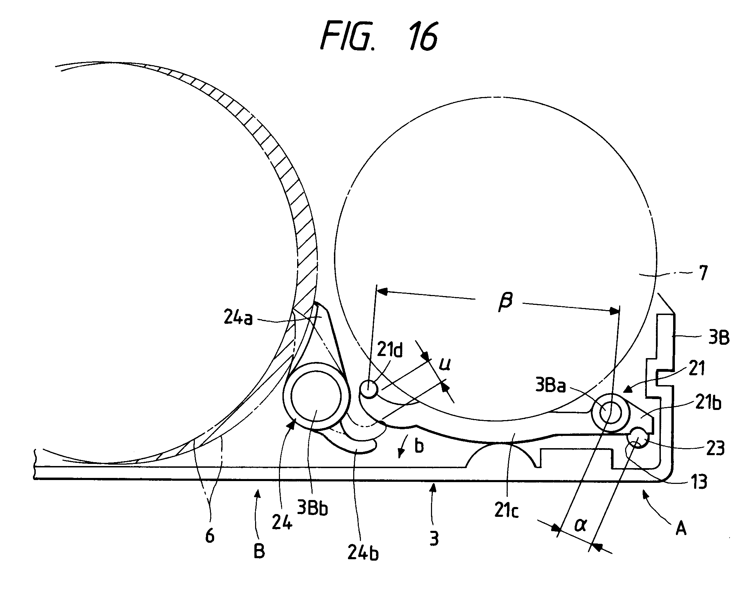

Fig. 16 shows a modified arrangement of the first and second brake mechanisms A, B embodying the present invention. The modified arrangement differs from the arrangement of the brake mechanisms A, B of the foregoing embodiment shown in Figs 5 and 8 in that the actuating pin 21d formed at the distal end of the arm 21c of the brake arm 21 is normally spaced from the pin engagement portion 24b of the brake member 24 at least by a predetermined distance *u* so as to accommodate a limited displacement of the supply reel hub 6 which may occur when the compact size tape cassette is loaded in a compact video tape recorder or a tape cassette adapter.

The supply reel hub 6 is displaceable within a limited range indicated by hatching in Fig. 16 so as to facilitate insertion of a supply reel spindle (not shown) of the compact video tape recorder or of the tape cassette adapter into a central hole (not shown) of the supply reel hub 6. In order to accommodate the limited displacement of the supply reel hub 6, the brake member 24 must be rotatable about the support shaft 3Bb between a first position indicated by the solid lines and a second position indicated by the phantom lines, without exerting influence on the locking engagement between the take-up reel hub 7 and the brake arm 21. In this instance, if the actuating pin 21d of the brake arm 21 is held in contact with the pin engagement portion 24b of the brake member 24, the brake member 24 is prohibited by the brake arm 21 from turning about the support shaft 3Bb in one direction. Thus, the brake member 24 is no longer possible to follow the limited displacement of the supply reel hub 6, so that a smooth loading of the compact size tape cassette in the compact video tape recorder or the tape cassette adapter is difficult to achieve.

As described above, in the modified arrangement of the brake mechanisms A, B shown in Fig. 16, the pin engagement portion 24b of the brake member 24 and the actuating pin 21d of the brake arm 21 are spaced apart at least by the predetermined distance *u* in the normal state, i.e., when the brake arm 21 and the brake member 24 are disposed in an operating or braking position.

When the brake mechanism B is to be released (that is, when the brake member 24 is to be disposed in a releasing position at the time of loading of the compact size tape cassette), the actuating pin 21d must be movable such that it first engages the pin engagement portion 24b across the distance *u* and subsequently turns the brake member 24 in a direction to disengage the locking pawl 24a from the toothed gear 6c (Fig. 5) of the supply reel hub 6. To this end, an angular motion of the pin engagement portion 21b caused by the brake-releasing pin 23 is multiplied by properly setting the leverage of the brake arm 21. The leverage of the brake arm 21 is determined by the ratio of the distance α between the longitudinal axis of the brake-releasing pin 23 and the longitudinal axis of the support shaft 3Ba (effective length of the pin engagement portion 21b) and the distance β between the longitudinal axis of the support shaft 3Ba and the longitudinal axis of the actuating pin 21d (effective length of the arm 21c). The α to β ratio may preferably range from 1:6 to 1:12. With the thus-determined leverage of the brake arm 21, the angular motion of the brake arm 21 in the direction indicated by the arrow *b* for releasing the take-up reel hub 7 can reliably be transmitted to the pin engagement portion 24b of the bake member 24 via the actuating pin 21d, with the result that the brake-releasing operation of the supply reel hub 6 takes place in synchronism with the brake-releasing operation of the take-up reel hub 7.

Obviously, the modified arrangement of the first and second brake mechanisms A, B shown in Fig. 16 may include an abutment which, as shown in Figs. 9 - 12, is associated with the locking pawl of at least one of the brake arm and the brake member so as to prevent the locking pawl from moving into a space between opposite annular flanges of the corresponding reel hub.

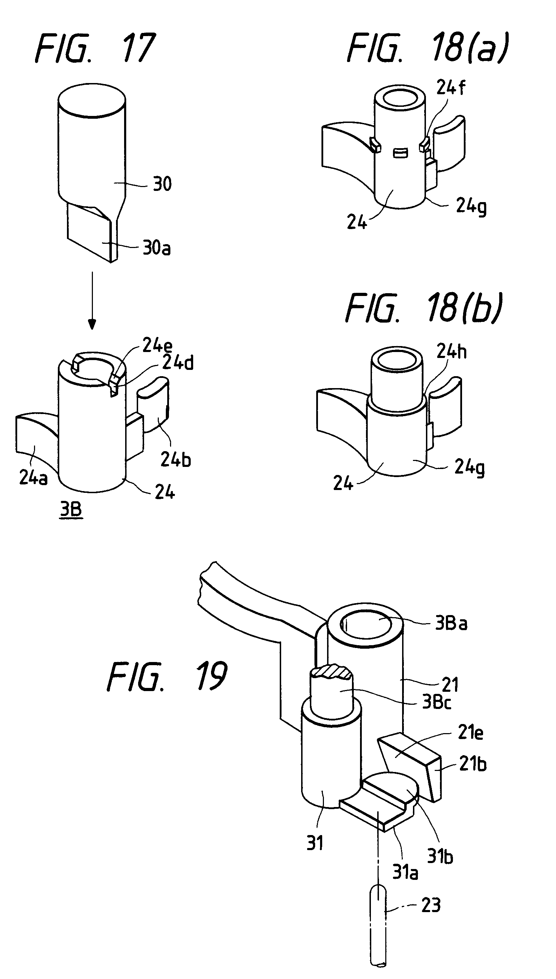

As shown in Fig. 17, the brake member 24 may have a longitudinal slit 24d extending from an upper end to a predetermined extent. The slit 24d is receptive of a tip 30a of an inspection and adjustment tool or jig 30 for enabling inspection and correction of the position of the brake member 24 relative to the lower shell 3B during the course of an automated assembling of the compact size tape cassette on an automatic tape cassette assembling machine (not shown). The slit 24d has an outwardly flared open end 24e for guiding the tip 30a into the slit 24d.

In assembling the compact size tape cassette, the inspection and adjustment tool 30 attached to the automatic tape cassette assembling machine is lowered to force the tip 30a into the slit 24d. In this instance, the distance between the inside surface of the lower shell 3B and a front end of the tip 30a (namely, the distance between the bottom of the slit 24d and the inside surface of the lower shell 3B) is detected to inspect the vertical position of the brake member 24 relative to the inside surface of the lower shell. With this inspection, it is possible to confirm whether the locking pawl 24a rides on the lower annular flange 6d (Fig. 5) of the supply reel hub 6. In addition, the angular position of the tip 30a is also detected so as to inspect the angular position of the brake member 24 relative to the lower shell 3B. In this instance, since the tip 30a is forced into the slit 24d, the brake member 24 is automatically turned about the support shaft 3Bb (Figs 5 and 16) into a correct angular position relative to the lower shell 3B if the brake member 24 is inaccurately mounted on the support shaft 3Bb. The correction of the angular position of the brake member 24 also facilitates attachment of the spring 25 (Fig. 5) to the brake member 24. The shape of the slit 24d shown in the illustrated embodiment is not restrictive but illustrative of a preferred form of the slit 24d.

Thus, the slit 24d formed in an upper end portion of the brake member 24 for receiving the tip 30a of the inspection and adjustment tool 30 attached to the automatic tape cassette assembling machine serves as a means for enabling inspection and correction of the position of the brake member relative to the lower shell 3B during the course of an automated assembling of the compact size tape cassette. The brake member 24 can, therefore, be assembled in an accurate position on the lower shell 3B by the automatic tape cassette assembling machine.

Figs. 18(a) and 18(b) show preferred forms of a spring retainer for support the spring 25 (Fig. 5) on a cylindrical body 24g of the brake member 24. The spring retainer shown in Fig. 18(a) comprises a plurality of projections 24f formed on an outer peripheral surface of the cylindrical body of the brake member 24 and circumferentially spaced at equal angular intervals. The projections 24f supports thereon the spring 25 loosely fitted around the cylindrical body 28g of the brake member 25. The spring 25 is thus retained accurately in a horizontal position parallel to an inside surface of the lower shell 3B (Fig. 5). The spring retainer shown in Fig. 18(b) comprises an annular horizontal step 24h formed on an outer peripheral surface of the cylindrical body of the brake member 24 for supporting thereon the torsion coil spring 25 loosely fitted around the cylindrical body 24g of the brake member 24. The spring 25 thus supported is retained accurately in a horizontal position parallel to the inside surface of the lower shell 3B.

With the spring retainer thus provided, the spring 25 can easily be attached to the brake member 24 by the automatic tape cassette assembling machine. In the illustrated embodiments, the spring retainer is provided on the brake member 24. Though not shown, the spring retainer may be provided on the cylindrical body of the brake arm 21 (Fig. 5) in the same manner as done with the brake member 24.

Fig. 19 is a release lever 31 associated with the brake arm 21 for turning the latter in a direction to disengage the locking pawl 21a (Fig. 5) from the toothed gear 7a of the take-up reel hub 7. The release lever 31 is slidably mounted on a third support shaft 3Bc disposed adjacent to the first support shaft 3Ba and upstanding from the inside surface of the lower shell 3B (Fig. 5). The release lever 31 is slidable in a direction parallel to a longitudinal axis of the support shaft 3Bc and is normally urged by a spring (not shown) toward the inside surface of the lower shell 3B. The release lever 31 has a lateral projecting or wing 31a engageable with the beak-releasing pin 23 when the beak-releasing pin 23 is inserted into the housing 3 (Fig. 5) to lift up the release lever 31, and an actuating portion 31b integral with the wing 31a and engageable with the oblique engagement surface 21e of the engagement portion 21b of the brake arm 21 in response to an upward movement of the brake lever 31.

When the compact size tape cassette is loaded in the compact video tape recorder or the tape cassette adapter, the brake-releasing pin 23 is inserted into the housing 3. The brake-releasing pin 23 engages the under surface of the wing 31a and then moves the release lever 31 upwardly along the support shaft 3Bc against the force of the non-illustrated spring. As the release lever 31 moves upwardly, the actuating portion 31b engages the oblique engagement surface 21e of the engagement portion 21b and subsequently slides upwardly along the oblique engagement surface 21e, thereby causing the brake arm 21 to turn in a direction to release the braking force from the take-up reel hub 7. The brake releasing operation of the brake arm 21 simultaneously causes the brake releasing operation of the brake member 24 as described above.

Since the wing 31a of the release lever 31 is relatively wide, the reliability of engagement between the wing 31a and the brake-releasing pin 23 is higher than the reliability of engagement between the oblique engagement surface 21e and the brake-releasing pin 23. Consequently, the brake releasing operation can be performed reliably without being influenced by the shape of the brake-releasing pin 23. The wing 31a may have an oblique under surface in which instance the release lever 31 must be rotatable about the support shaft 3Bc and normally urged in a direction such as to keep the actuating portion 31b inactive relative to the engagement surface 21e of the engagement portion 21b.

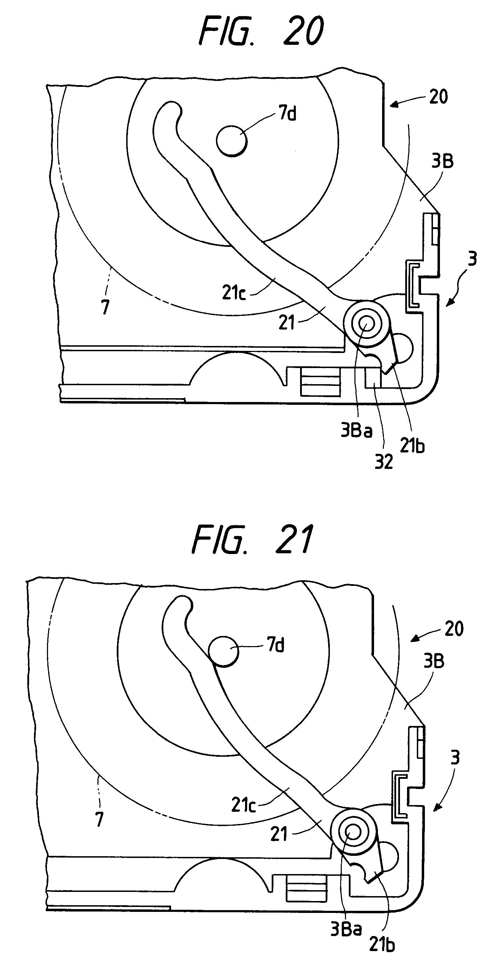

As shown in Fig. 20, the compact size tape cassette may be provided with a brake arm stopper 32 for limiting angular movement of the brake arm 21 to keep the latter out of contact with an upstanding reel shaft 7d secured to the lower shell 3B of the housing 3 for rotatably supporting the take-up reel hub 7. In the illustrated embodiment, the brake arm stopper 32 comprises a projection formed on a rear wall of the lower shell 3B adjacent to the support shaft 3Ba. The projection 30 (brake arm stopper) is engageable with the engagement portion 21b of the brake arm 21 before the arm 2c of the brake arm 21 engages the reel shaft 7d when the brake arm 21 is forced by the spring 22 (Fig. 5) to turn clockwise about the support shaft 3Ba to move the arm 21c toward the reel shaft 7d.

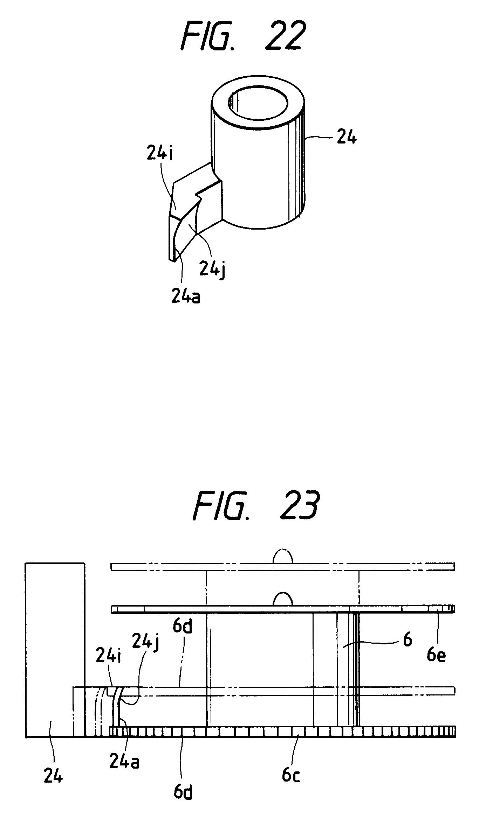

Referring back to Fig. 5, since the bake arm 21 and the brake member 24 are urged against the lower annular flanges of the respective reel hubs 7, 6 by the force of the springs 22, 25 so as to lock the reel hubs 7, 6 in position against rotation relative to the housing 3, if the brake arm 21 is mounted on the support shaft 3Ba prior to the mounting of the take-up reel hub 7 on the reel shaft 7d (Fig. 20), the brake arm 21 is forced by the spring 22 to turn clockwise about the support shaft 3Ba until the arm 21c abuts against the reel shaft 7d, as shown in Fig. 21. On this engagement, a lubricant such as silicone oil which is coated over the reel shaft 7d for smooth rotation of the take-up reel hub 7 is transferred from the reel shaft 7d onto the arm 21c of the brake arm 21. After the reel hubs 7, 6 are assembled, if the magnetic tape 2 wound around the reel hubs 7, 6 is slackened for some reasons, the lubricant on the arm 21c may adhere to the magnetic tape 2. The magnetic tape 2 thus contaminated with lubricant is no longer possible to record or reproduce date signals accurately. The brake arm stopper 32 solves the problem arising from the engagement between the brake arm 21 and the reel shaft 7d.

The brake arm stopper 32 may be provided on the brake arm 21 in the form of a projection which is integral with the engagement portion 21b and engageable with a portion of the housing 3 (the rear wall of the lower shell 3B, for example) to keep the brake arm 21 out of contact with the reel shaft 7d.

Figs. 22 through 28 show various forms of a cam means associated with the brake member 24 and engageable with a portion of the supply reel hub 6 for temporarily displacing the brake member 24 into a releasing position in response to upward movement of the supply reel hub 6.

In the compact size tape cassette described above with reference to Fig. 5, the supply reel hub 6 and the take-up reel hub 7 are rotatable in a direction to wind up the magnetic tape 2 but is prevented from rotating in the opposite direction to slacken the magnetic tape 2. Thus, the magnetic tape 2 is likely to be over-tensioned when the user compensate an undue slack of the magnetic tape 2 caused by some seasons or when the magnetic tape 2 is tightly wound up through a misunderstanding on the user's side about an allowable slack. With this over-tensioning of the magnetic tape 2, the supply reel hub 6 is displaced toward the take-up reel hub 7, as shown in Fig. 14. The compact size tape cassette 20 having such displaced supply reel hub 6 cannot be loaded in the compact video tape recorder or the tape cassette adapter because a reel spindle of the video tape recorder or the adapter impinges on the under surface of the supply reel hub 6 without being received in a central hole in the supply reel hub 3 and lifts up the supply reel hub 6. The above-mentioned cam means is proposed to overcome the foregoing problem and enable a smooth loading of the compact size tape cassette in the compact video tape recorder or the tape cassette adapter even when the supply reel hub 6 is displaced due to over-tensioning of the magnetic tape 2.

The cam means shown in Fig. 22 comprises an elongate projection 24i integral with an upper part of the locking pawl 24a of the brake member 24, and a concave cam surface 24j formed on one side of the projection 24i and extending contiguously with a side surface of the locking pawl 24a. The concave cam surface 24j is tilted down toward the center of the supply reel hub 6. The cam surface 24j is slidably engageable with a periphery of the lower annular flange 6d of the supply reel hub 6 when the supply reel hub 6 is moved upwardly as indicated by the phantom lines in Fig. 23. In response to the upward movement of the supply reel hub 6, the projection 24i is forced by the lower annular flange 6d to turn the brake member 24 in a direction radially away from the supply reel hub 6, thereby temporarily releasing the braking on the supply reel hub 6. The supply reel hub 6 thus released is now displaceable in a direction to slacken the magnetic tape 2, so that the reel spindle is readily fitted in the central hole in the supply reel hub 6. Consequently, a smooth loading of the compact size tape cassette in the compact video tape recorder or the adapter can be achieved.

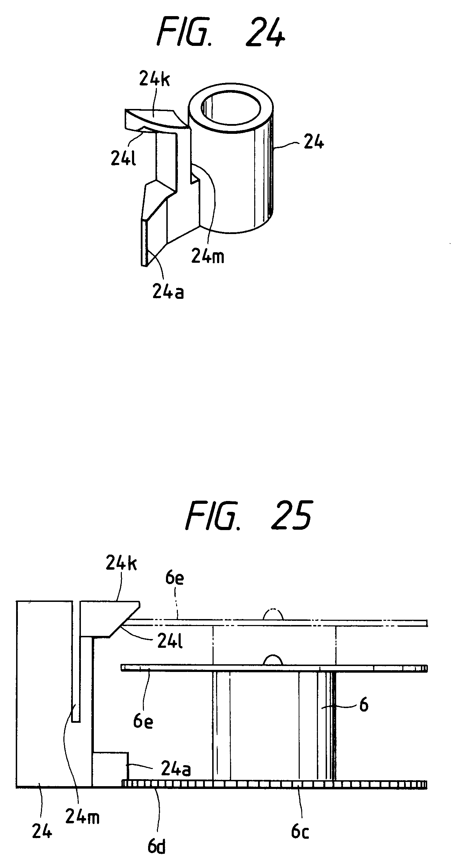

The cam means shown in Fig. 24 comprises an elongate projection 24k integral with the locking pawl 24a and extending above the locking pawl 24a, and a convex cam surface 24l formed on the projection 24k and tilted down toward the supply reel hub 6. When the supply reel hub 6 is lifted as indicated by the phantom lines in Fig. 25, the convex cam surface 24l engages the periphery of the upper annular flange 6e. A continued upward movement of the supply reel hub 6 causes the brake member 54 to turn into the releasing position in which the locking pawl 24a is disengaged from the toothed gear 6c of the supply reel hub 6. Designated by 24m is a groove provided between the body of the brake member 24 and the projection 24k for receiving a part of the spring 25 (Fig. 5).

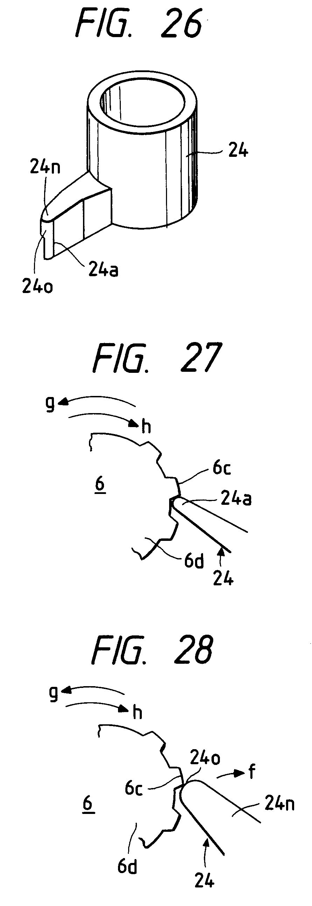

The cam means shown in Fig. 28 comprises an elongate projection 24n formed integrally with an upper part of the locking pawl 24a and swelled in a direction radially outwardly away from the supply reel hub 6, a round cam surface 24o formed on a front end of the longitudinal projection and extending contiguously to the front end surface of the locking pawl 24a. The round cam surface 24o has a curvature sufficiently greater than the width of a groove of each adjacent pair of teeth of the toothed gear 6c. As the supply reel hub 6 is moved upwardly, a tooth of the gear 6c which is held in engagement with the locking pawl 24a as shown in Fig. 27 is brought into contact with the round cam surface 24o of the projection 24n. In this instance, since the projection 24n is swelled outwardly away from the supply reel hub 6, and since the curvature of the round surface 24o is sufficiently greater than the width of the grooves of the toothed gear 6c, the projection 24n is not interlocked with the toothed gear 6c. Consequently, when the supply reel hub 6 is subjected to a force tending to rotate the supply reel hub 6 in the direction of the arrow *h* in Fig. 28, the projection 24n turns in the direction indicated by the arrow *f* due to co-action between the round cam surface 24o and the tooth of the gear 6c, thereby angularly displacing the brake member 24 into the releasing position.

The concave cam surface 24j, the convex cam surface 24l and the round cam surface 24o may be substituted by an inclined cam surface.

The foregoing description of the prevent invention is directed to a compact size tape cassette for use in video tape recorders. It is to be noted however that the compact size tape cassette may be used in some apparatus other than the video tape recorders.

Obviously, various minor changes and modifications of the present invention are possible in the light of the above teaching. It is therefore to be understood that within the scope of the appended claims the invention may be practiced otherwise than as specifically described.

## Claims

1. A compact size tape cassette including a housing (3), first and second reel hubs (7, 6) rotatably mounted within the housing (3), with a magnetic tape (2) wound therearound, and rotatably mounted first and second brake mechanisms (A, B) associated with said first and second reel hubs (7, 6), respectively, for locking said first and second reel hubs (7, 6) in position against rotation relative to said housing (3) when said first and second brake mechanisms (A, B) are in braking positions; characterised in that
said first brake mechanism (A) has a driving portion (21d) and said second brake mechanism (B) has a driven portion (24b), spaced from said driving portion (21d) by at least a predetermined distance (u) when said first and second brake mechanisms (A, B) are in said braking positions, and that
when said first brake mechanism is released, said driving portion (21d) is moved across said predetermined distance (u) into abutment with said driven portion (24b) so as to displace said driven portion (24b) to release said second brake mechanism (B).

2. A compact size tape cassette according to claim 1, wherein said second reel hub (6) has an annular flange (6d), said first reel hub (7) having an annular flange (7b), said first brake mechanism (A) includes a first toothed gear (7a) formed on a periphery of said annular flange (7b) of said first reel hub (7), a brake arm (21) pivotally mounted within said housing (3), and a first spring (22) for urging said brake arm (21) to turn in a first direction, said brake arm (21) having a first locking pawl (21a) normally held in mesh with said first toothed gear (7a) by the force of said first spring (22) when said first brake mechanism is in said braking position, a first engagement portion (21b) engageable with a brake-releasing element (23; 31) to turn said brake arm (21) in a second direction opposite to said first direction for disengaging said locking pawl (21a) from said first toothed gear (7a), and an arm (21c) for transmitting an angular motion of said brake arm (21) in said second direction to said second brake mechanism (B), said arm (21c) having said driving portion at a distal end thereof, said second brake mechanism (B) including a second toothed gear (6c) formed on a periphery of said annular flange (6d) of said supply reel hub (6), a brake member (24) pivotally mounted within said housing (3), and a second spring (25) for urging said brake member (24) to turn in said second direction, said brake member (24) having a second locking pawl (24a) normally held in mesh with said second toothed gear (6c) by the force of said second spring (25), when said second brake mechanism (3) is in said braking position, said brake member (24) having said drive portion (24b) spaced from said driving portion by at least said predetermined distance (u) when said first and second brake mechanisms (A, B) are in said braking positions, said brake member (24) being rotatable in said first direction to disengage said second locking pawl (24a) from said second toothed gear (6c) when said angular motion of said brake arm (21) in said second direction is transmitted to said driven portion (24b) via said driving portion (21c) across said predetermined distance (u).

3. A compact size tape cassette according to claim 2, wherein the brake arm (21) has a leverage determined by the ratio of a first distance (α) between a pivot axis of said brake arm (21) and a point of engagement between said first engagement portion (21b) and said brake-releasing element (23), and a second distance (β) between a pivot axis of said brake arm (21) and said distal end of said arm (21c), said ratio of first to second distance ranging from 1:6 to 1:12.

4. A compact size tape cassette according to claim 2, 3 or 4, wherein said first locking pawl (21a) is shaped such that rotation of said first reel hub (7) in one direction such as to loosen said magnetic tape (2) is prevented while permitting rotation of said first reel hub (7) in the opposite direction such as to wind up said magnetic tape (2) on said first reel hub (7), said second locking pawl (24a) being shaped such that rotation of said second reel hub (6) in one direction such as to loosen said magnetic tape (2) is prevented while permitting rotation of said second reel hub (6) in the opposite direction such as to wind up said magnetic tape (2) on said second reel hub (6), said magnetic tape (2) being held under tension between said second reel hub (6) and said first reel hub (7).

5. A compact size tape cassette according to any one of claims 2 to 4 wherein said driving portion comprises an actuating pin (21d) at said distal end of said arm (21c).

6. A compact size tape cassette according to any one of claims 2 to 5 wherein said first engagement portion (21b) has an oblique surface (21e) engageable with said brake-releasing element (23), said brake-releasing element (23) being movable in a direction parallel to an axis of rotation of said brake arm (21).

7. A compact size tape cassette according to any one of claims 2 to 6 wherein said first reel hub (7) further has a second annular flange (7c) spaced from the first-mentioned annular flange (7b), said first brake mechanism (A) further including an abutment (21f) normally spaced from a periphery of said second annular flange (7c) by a clearance (*t*) and engageable with said periphery of said second annular flange (7c) to prevent said first locking pawl (24a) from moving into a space between said second annular flange (7c) and said first-mentioned annular flange (7b) of said first reel hub (7).

8. A compact size tape cassette according to claim 7 wherein said abutment (21f) is formed on said brake arm (21) and vertically spaced from said first locking pawl (24a) by a pitch (*p*) substantially equal to the spacing (s) between said second annular flange (7c) and said first-mentioned annular flange (7b) of said first reel hub (7).

9. A compact size tape cassette according to claim 7 or 8 wherein said clearance (*t*) between said abutment (21f) and said periphery of said second annular flange (7c) ranges from 0.5 to 2 mm.

10. A compact size tape cassette according to claim 9 wherein said clearance (*t*) is in the range of 1 - 1.5 mm.

11. A compact size tape cassette according to any one of claims 1 to 10 wherein said second reel hub (6) further has a second annular flange (6e) spaced from the first-mentioned annular flange (6d), said second brake mechanism (B) further including an abutment (24c) normally spaced from a periphery of said second annular flange (6e) by a clearance (*t*) and engageable with said periphery of said second annular flange (6e) to prevent said second locking pawl (24a) from moving into a space between said second annular flange (6e) and said first-mentioned annular flange (6d) of said second reel hub (6).

12. A compact size tape cassette according to claim 11 wherein said abutment (24c) is formed on said brake member (24) and vertically spaced from said second locking pawl (24a) by a pitch (*p*) substantially equal to the spacing (*s*) between said second annular flange (6e) and said first-mentioned annular flange (6d) of said second reel hub (6).

13. A compact size tape cassette according to claim 11 or 12 wherein said clearance (*t*) between said abutment (24c) and said periphery of said second annular flange (6e) ranges from 0.5 to 2 mm.

14. A compact size tape cassette according to claim 13 wherein said clearance (*t*) is in the range of 1 - 1.5 mm.

15. A compact size tape cassette according to any one of claims 2 to 14 wherein said brake member (24) includes means (24d) for enabling inspection and correction of the position of said brake member (24) relative to said housing (3).

16. A compact size tape cassette according to claim 15 wherein said enabling means comprises a slit (24d) extending from an upper end of said brake member (24) to a predetermined extent along an axis of rotation of said brake member (24) for receiving a tip (30a) of an inspection and adjustment tool (30).

17. A compact size tape cassette according to claim 16 wherein said slit (24d) has an outwardly flared open end (24e).

18. A compact size tape cassette according to any one of claims 2 to 17 wherein said brake arm (21) and said brake member (24) have a cylindrical body (24g), said first and second springs (22, 25) comprising a torsion coil spring loosely fitted around said cylindrical body (24g) of a corresponding one of said brake arm (21) and said brake member (24), at least one of said brake arm (21) and said brake member (24) including a spring retainer (24f; 24h) for supporting thereon said torsion coil spring (22, 25) in a plane perpendicular to a longitudinal axis of said cylindrical body (24g).

19. A compact size tape cassette according to claim 18 wherein said spring retainer comprises a plurality of circumferentially spaced projections (24f) formed on an outer peripheral surface of said cylindrical body (24g) of said one of said brake arm (21) and said brake member (24).

20. A compact size tape cassette according to claim 18 wherein said spring retainer comprises a step (24h) formed on an outer peripheral surface of said cylindrical body (24g) of said one of said brake arm (21) and said brake member (24).

21. A compact size tape cassette according to any one of claims 2 to 20 wherein said brake-releasing element comprises an external brake-releasing pin (23) movable in a direction parallel to an axis of rotation of said brake arm (21), and a release lever (31) movably mounted within said housing (3) for transmitting movement of said brake-releasing pin (23) to said first engagement portion (21b) of said brake arm (21) for causing said brake arm (21) to turn in said second direction.

22. A compact size tape cassette according to claim 21 wherein said first engagement portion (21b) has an oblique surface (21e), said release lever (31) being movable in a direction parallel to said axis of rotation of said brake arm (21) and having a wing (31a) engageable with said brake-releasing pin (23), and an actuating portion (31b) integral with said wing (31a) and engageable with said oblique surface (21e) of said first engagement portion (21b).

23. A compact size tape cassette according to any one of claims 2 to 22 wherein said housing (3) includes a reel shaft (7d) on which said first reel hub (7) is rotatably mounted, and one of said housing (3) and said brake arm (21) has a brake arm stopper (32) for limiting angular movement of said brake arm (21) in said first direction to keep said brake arm (21) out of contact with said reel shaft (7d).

24. A compact size tape cassette according to claim 23 wherein said brake arm stopper (32) comprises a projection on a part of said housing (3) and engageable with said first engagement portion (21b) of said brake arm (21).

25. A compact size tape cassette according to any one of claims 2 to 24 wherein said second brake mechanism (B) further includes a cam means (24i, 24j; 24k, 24l; 24n, 24o) associated with said brake member (24) and engageable with a portion of said second reel hub (6) to turn said brake member (24) in said first direction for temporarily releasing said second reel hub (6) when said second reel hub (6) is lifted.

26. A compact size tape cassette according to claim 25 wherein said cam means (24i, 24j) comprises an elongate projection integral with an upper part of said second locking pawl (24a) and having a cam surface (24j) extending contiguously from a side surface of said second locking pawl and tilted down toward said annular flange (6d) of said second reel hub (6), said cam surface (24j) being slidably engageable with the periphery of said annular flange (6d).

27. A compact size tape cassette according to claim 26 wherein said cam surface (24j) comprises a concave cam surface.

28. A compact size tape cassette according to claim 25 wherein said cam means (24k, 24l) comprises an elongate projection (24k) integral with said brake member (24) and extending above said second locking pawl (24a), and a cam surface (24l) formed on said projection (24k) and tilted down toward said second reel hub (6), said second reel hub (6) having a second annular flange (6e) disposed above said first-mentioned annular flange (6d) and engageable with said cam surface (24l) on said projection (24k).

29. A compact size tape cassette according to claim 28 wherein said cam surface (24l) comprises a convex cam surface.

30. A compact size tape cassette according to claim 25 wherein said cam means (24n, 24o) comprises an elongate projection (24n) integral with an upper part of said second locking pawl (24a) and swelled in a direction radially outwardly away from said supply reel hub (6), and a round cam surface (24o) formed on a front end of said projection (24n) and extending contiguously to a side surface of said second locking pawl (24a), said round cam surface (24o) having a curvature greater than a width of a groove between each adjacent pair of teeth of said second toothed gear (6c).

## Patentansprüche

1. Band-Kassette von kompakter Größe, umfassend ein Gehäuse (3), erste und zweite Wickel-Naben (7, 6), die drehbar in dem Gehäuse (3) gelagert sind, mit einem Magnetband (2), das um sie gewickelt ist, und drehbar gelagerte erste und zweite Brems-Mechanismen (A, B), die der ersten bzw. der zweiten Wickel-Nabe (7, 6) zugeordnet sind, um die erste und die zweite Wickel-Nabe (7, 6) in einer Stellung gegen eine Rotation in Bezug auf das Gehäuse (3) zu verriegeln, wenn der erste und zweite Brems-Mechanismus (A, B) in der Brems-Stellung sind; dadurch gekennzeichnet, daß
der erste Brems-Mechanismus (A) einen Antriebs-Abschnitt (21d) und der zweite Brems-Mechanismus (B) einen angetriebenen Abschnitt (24b) aufweist, der von dem Antriebs-Abschnitt (21d) zumindest um einen vorbestimmten Abstand (u) entfernt ist, wenn der erste und der zweite Brems-Mechanismus in der Brems-Stellung sind, und daß
dann wenn der erste Brems-Mechanismus freigegeben ist, der Antriebs-Abschnitt (21d) über den vorbestimmten Abstand (u) bis zum Anliegen an den angetriebenen Abschnitt (24d) bewegt wird, um so den angetriebenen Abschnitt (24d) zu verschieben, um den zweiten Brems-Mechanismus (B) freizugeben.

2. Band-Kassette von kompakter Größe nach Anspruch 1, wobei die zweite Wickel-Nabe (6) einen ringförmigen Flansch (6d) aufweist, wobei die erste Wickel-Nabe (7) einen ringförmigen Flansch (7b) aufweist, wobei der erste Brems-Mechanismus (A) umfaßt: ein erstes Zahnrad (7a), das auf einem Umfang des ringförmigen Flansches (7b) der ersten Wickel-Nabe (7) gebildet ist, einen Brems-Arm (21), der schwenkbar in dem Gehäuse (3) befestigt ist, und eine erste Feder (22), um den Brems-Arm (21) in einer ersten Richtung zu drehen, wobei der Brems-Arm (21) eine erste Sperr-Klinke (21a) aufweist, die normalerweise in Eingriff mit dem ersten Zahnrad (7a) durch die Kraft der ersten Feder (22) gehalten wird, wenn der erste Brems-Mechanismus in der Brems-Stellung ist, einen ersten Eingriffs-Abschnitt (21b), der mit einem Bremsen-Freigabe-Element (23; 31) in Eingriff bringbar ist, um den Brems-Arm (21) in einer zweiten Richtung zu drehen, die der ersten Richtung entgegengesetzt ist, um die Sperr-Klinke (21a) von dem ersten Zahnrad (7a) außer Eingriff zu bringen, und einen Arm (21c), um eine Drehbewegung des Brems-Armes (21) in der zweiten Richtung zu dem zweiten Brems-Mechanismus (B) zu übertragen, wobei der Arm (21c) den Antriebs-Abschnitt an seinem distalen Ende aufweist, wobei der zweite Brems-Mechanismus (B) umfaßt: ein zweites Zahnrad (6c), das an einem Umfang des ringförmigen Flansches (6d) der Abwickel-Nabe (6) gebildet ist, ein Brems-Glied (24), das schwenkbar in dem Gehäuse (3) gelagert ist, und eine zweite Feder (25), um das Brems-Glied (24) in die zweite Richtung zu drehen, wobei das Brems-Glied (24) eine zweite Sperr-Klinke (24a) aufweist, die normalerweise in Eingriff mit dem zweiten Zahnrad (6c) durch die Kraft der zweiten Feder (25) gehalten wird, wenn der zweite Brems-Mechanismus (3) in der Brems-Stellung ist, wobei das Brems-Glied (24) den angetriebenen Abschnitt (24b) von dem Antriebs-Abschnitt zumindest um einen vorbestimmten Abstand (u) entfernt aufweist, wenn der erste und der zweite Brems-Mechanismus (A, B) in der Brems-Stellung sind, wobei das Brems-Glied (24) in der ersten Stellung drehbar ist, um die zweite Sperr-Klinke (24a) von dem zweiten Zahnrad (6c) außer Eingriff zu bringen, wenn die Drehbewegung des Brems-Armes (21) in der zweiten Richtung auf den angetriebenen Abschnitt (24b) über den Antriebs-Abschnitt (21c) über den vorbestimmten Abstand (u) übertragen wird.

3. Band-Kassette von kompakter Größe nach Anspruch 2, wobei der Brems-Arm (21) ein Hebel-Verhältnis aufweist, das durch das Verhältnis eines ersten Abstandes (α) zwischen einer Schwenkachse des ersten Brems-Armes (21) und einem Eingriffs-Punkt zwischen dem ersten Eingriffs-Abschnitt (21b) und dem Bremsen-Freigabe-Element (23) und eines zweiten Abstandes (β) zwischen einer Schwenkachse des Brems-Armes (21) und dem distalen Ende dieses Armes (21c) bestimmt ist, wobei das Verhältnis des ersten und des zweiten Abstandes im Bereich von 1:6 bis 1:12 liegt.

4. Band-Kassette von kompakter Größe nach Anspruch 2, 3 oder 4, wobei die erste Sperr-Klinke (21a) so geformt ist, daß eine Drehung der ersten Wickel-Nabe (7) in einer Richtung um das Magnetband (2) zu lockern, verhindert wird, während eine Drehung der ersten Wickel-Nabe (7) in der entgegengesetzten Richtung, um das Magnetband (2) auf einer ersten Wickel-Nabe (7) aufzuwickeln, zugelassen wird, wobei die zweite Sperr-Klinke (24a), so geformt ist, daß eine Drehung der zweiten Wickel-Nabe (6) in einer Richtung, um das Magnetband (2) zu lockern, verhindert wird, während eine Drehung der zweiten Wickel-Nabe (6) in der entgegengesetzten Richtung, um das Magnetband (2) auf der zweiten Wickel-Nabe (6) aufzuwickeln, zugelassen wird, wobei das Magnetband (2) zwischen der zweiten Wickel-Nabe (6) und der ersten Wickel-Nabe (7) unter Spannung gehalten wird.

5. Band-Kassette von kompakter Größe nach einem der Ansprüche 2 bis 4, wobei der Antriebs-Abschnitt einen Betätigungs-Stift (21d) an dem distalen Ende dieses Armes (21c) aufweist.

6. Band-Kassette von kompakter Größe nach einem der Ansprüche 2 bis 5, wobei der erste Eingriffs-Abschnitt (21b) eine geneigte Fläche (21e) aufweist, die mit dem Bremsen-Freigabe-Element (23) in Eingriff bringbar ist, wobei das Bremsen-Freigabe-Element (23) in einer Richtung parallel zu einer Drehachse des Brems-Armes (21) bewegbar ist.

7. Band-Kassette von kompakter Größe nach einem der Ansprüche 2 bis 6, wobei die erste Wickel-Nabe (7) weiters einen zweiten ringförmigen Flansch (7c) aufweist, der von dem zuerst beschriebenen Flansch (7b) im Abstand angeordnet ist, wobei der erste Brems-Mechanismus (A) weiters einen Anschlag (21f) umfaßt, der normalerweise von einem Umfang des zweiten ringförmigen Flansches (6c) um ein Spiel (t) entfernt angeordnet ist, und der mit dem Umfang des zweiten ringförmigen Flanschen (7c) in Eingriff bringbar ist, um zu verhindern, daß sich die Sperr-Klinke (24a) in einen Raum zwischen dem zweiten ringförmigen Flansch (7c) und dem zuerst beschriebenen ringförmigen Flansch (7b) der ersten Wickel-Nabe (7) bewegt.

8. Band-Kassette von kompakter Größe nach Anspruch 7, wobei der Anschlag (21f) auf einem Brems-Arm (21) gebildet ist, und vertikal um eine Strecke (p) im Abstand von der ersten Sperr-Klinke (24a) angeordnet ist, die im wesentlichen gleich dem Abstand (s) zwischen dem zweiten ringförmigen Flansch (7c) und dem zuerst beschriebenen ringförmigen Flansch (7b) der ersten Wickel-Nabe (7) ist.

9. Band-Kassette von kompakter Größe nach Anspruch 7 oder 8, wobei das Spiel (t) zwischen dem Anschlag (21f) und dem Umfang des zweiten ringförmigen Flansches (7c) zwischen 0,5 und 2 mm beträgt.

10. Band-Kassette von kompakter Größe nach Anspruch 9, wobei das Spiel (t) in dem Bereich von 1 - 1,5 mm liegt.

11. Band-Kassette von kompakter Größe nach einem der Ansprüche 1 - 10, wobei die zweite Wickel-Nabe (6) weiteres einen zweiten ringförmigen Flansch (6e) aufweist, der von dem zuerst beschriebenen ringförmigen Flansch (6d) im Abstand angeordnet ist, wobei der zweite Brems-Mechanismus (B) weiters einen Anschlag (24c) umfaßt, der normalerweise von einem Umfang des zweiten ringförmigen Flansches (6e) um ein Spiel (t) entfernt angeordnet ist, und der mit dem Umfang des zweiten ringförmigen Flansches (6e) in Eingriff bringbar ist, um zu verhindern, daß sich die zweite Sperr-Klinke (24a) in einen Raum zwischen dem zweiten ringförmigen Flansch (6e) und dem zuerst beschriebenen ringförmigen Flansch (6d) der zweiten Wickel-Nabe (6) bewegt.

12. Band-Kassette von kompakter Größe nach Anspruch 11, wobei der Anschlag (24c) auf dem Brems-Glied (24) gebildet ist und vertikal um eine Strecke (p) von der zweiten Sperr-Klinke (24a) im Abstand angeordnet ist, die im wesentlichen gleich dem Abstand (s) zwischen dem zweiten ringförmigen Flansch (6e) und dem zuerst beschriebenen ringförmigen Flansch (6d) der zweiten Wickel-Nabe (6) ist.

13. Band-Kassette von kompakter Größe nach Anspruch 11 oder 12, wobei das Spiel (t) zwischen dem Anschlag (24c) und dem Umfang des zweiten ringförmigen Flansches (6e) in dem Bereich von 0,5 bis 2 mm liegt.

14. Band-Kassette von kompakter Größe nach Anspruch 13, wobei das Spiel (t) in dem Bereich von 1 - 1,5 mm liegt.

15. Band-Kassette von kompakter Größe nach einem Ansprüche 2 bis 14, wobei das Brems-Glied (24) Mittel (24d) zur Ermöglichung der Kontrolle und der Korrektur der Stellung des Brems-Gliedes (24) im Bezug auf das Gehäuse (3) umfaßt.

16. Band-Kassette von kompakter Größe nach Anspruch 15, wobei das Ermöglichungs-Mittel einen Schlitz (24d) umfaßt, der sich von einem oberen Ende des Brems-Gliedes (24) um ein vorbestimmtes Ausmaß entlang einer Drehachse des Brems-Gliedes (24) erstreckt, um eine Spitze (30a) eines Kontroll- und Einstell-Werkzeuges (30) aufzunehmen.

17. Band-Kassette von kompakter Größe nach Anspruch 16, wobei der Schlitz (24d) ein nach außen abschrägtes, offenes Ende (24e) aufweist.

18. Band-Kassette von kompakter Größe nach einem der Ansprüche 2 bis 17, wobei der Brems-Arm (21) und das Brems-Glied (24) einen zylindrischen Körper (24g) aufweisen, wobei die erste und die zweite Feder (22, 25) eine Torsions-Schrauben-Feder umfassen, die locker um den zylindrischen Körper (24g) des Brems-Armes (21) bzw. des Brems-Gliedes (24) gefügt ist, wobei entweder der Brems-Arm (21) oder das Brems-Glied (24) oder beide einen Feder-Rückhalter (24f; 24a) aufweisen, um darauf die Torsions-Schrauben-Feder (22, 25) in einer Ebene abzustützen, die rechtwinkelig zu einer Längsachse des zylindrischen Körpers (24g) ist.

19. Band-Kassette von kompakter Größe nach Anspruch 18, wobei der Feder-Rückhalter eine Mehrzahl von am Umfang im Abstand angeordneten Vorsprüngen (24f) aufweist, die auf einer äußeren Umfangsfläche des zylindrischen Körpers (24g) des Brems-Armes (21) bzw. des Brems-Gliedes (24) gebildet sind.

20. Band-Kassette von kompakter Größe nach Anspruch 18, wobei der Feder-Rückhalter einen Schritt (24h) aufweist, der an einer äußeren Umfangsfläche des zylindrischen Körpers (24g) des Brems-Armes 21 bzw. des Brems-Gliedes (24) gebildet ist.

21. Band-Kassette von kompakter Größe nach einem der Ansprüche 2 bis 20, wobei. das Bremsen-Freigabe-Element einen externen Bremsen-Freigabe-Stift (23), der in einer Richtung parallel zur Drehachse des Brems-Armes (21) beweglich ist, sowie einen Freigabe-Hebel (31) umfaßt, der beweglich in dem Gehäuse (3) gelagert ist, um die Bewegung des Bremsen-Freigabe-Stiftes (23) auf den ersten Eingriffs-Abschnitt (21b) des ersten Brems-Armes (21) zu übertragen, um zu bewirken, daß sich der Brems-Arm (21) in die zweite Richtung dreht.

22. Band-Kassette von kompakter Größe nach Anspruch 21, wobei der erste Eingriffs-Abschnitt (21b) eine geneigte Fläche (21e) aufweist, wobei der Freigabe-Hebel (31) in eine Richtung parallel zur Drehachse des Brems-Armes (21) beweglich ist, und einen Flügel (31a) aufweist, der mit dem Bremsen-Freigabe-Stift (23) in ein Eingriff bringbar ist, sowie einen Betätigungs-Abschnitt (31b), der einstückig mit dem Flügel (31a) ausgebildet ist, und der mit der geneigten Fläche (21e) des ersten Eingriffs-Abschnittes (21b) in Eingriff bringbar ist.

23. Band-Kassette von kompakter Größe nach einem der Ansprüche 2 bis 22, wobei das Gehäuse (3) eine Wickel-Achse (7d) umfaßt, auf der die erste Wickel-Nabe (7) drehbar befestigt ist, und wobei das Gehäuse (3) oder der Brems-Arm (21) einen BremsArm-Anschlag (32) aufweist, um die Wickel-Bewegung des BremsArmes (21) in der ersten Richtung zu begrenzen, um den Brems-Arm (21) von einer Berührung mit der Wickel-Achse (7d) fernzuhalten.

24. Band-Kassette von kompakter Größe nach Anspruch 23, wobei der Brems-Arm-Anschlag (32) einen Vorsprung auf einem Teil des Gehäuses (3) umfaßt, und mit einem ersten Eingriffs-Abschnitt (21b) des Brems-Armes (21) in Eingriff bringbar ist.

25. Band-Kassette von kompakter Größe nach einem der Ansprüche 2 bis 24, wobei der zweite Brems-Mechanismus (B) weiters ein Nocken-Mittel (24i, 24j; 24k, 24l; 24n, 24o) umfaßt, das dem Brems-Glied (24) zugeordnet ist, und das mit einem Abschnitt der zweiten Wickel-Nabe (6) in Eingriff bringbar ist, um das Brems-Glied (24) in einer ersten Richtung zu drehen, um die zweite Wickel-Nabe 6 vorübergehend freizugeben, wenn die zweite Wickel-Nabe (6) angehoben wird.

26. Band-Kassette von kompakter Größe nach Anspruch 25, wobei das Nocken-Mittel (24i, 24j) einen länglichen Vorsprung umfaßt, der einstückig mit dem oberen Teil der zweiten Sperr-Klinke (24a) ausgebildet ist, und eine Nocken-Fläche (24j) aufweist, die sich durchgängig von einer Seitenfläche der zweiten Sperr-Klinke erstreckt, und nach unten zum ringförmigen Flansch (6d) der zweiten Wickel-Nabe (6) geneigt ist, wobei die Nocken-Fläche (24j) in gleitenden Eingriff mit dem Umfang des ringförmigen Flansches (6d) bringbar ist.

27. Band-Kassette von kompakter Größe nach Anspruch 26, wobei die Nocken-Fläche (24j) eine konkave Nocken-Fläche umfaßt.

28. Band-Kassette von kompakter Größe nach Anspruch 25, wobei das Nocken-Mittel (24k, 24l) einen länglichen Abschnitt (24k) umfaßt, der einstückig mit dem Brems-Glied (24) ist, und der sich über die zweite Sperr-Klinke (24a) erstreckt, sowie eine Nocken-Fläche (24l), die auf dem Vorsprung (24k) gebildet ist, und die nach unten zur zweiten Wickel-Nabe (6) geneigt ist, wobei die zweite Wickel-Nabe (6) einen zweiten ringförmigen Flansch (6e) aufweist, der ober dem zuerst beschriebenen ringförmigen Flansch (6d) angeordnet ist, und mit der Nocken-Fläche (24l) auf dem Vorsprung (24k) in Eingriff bringbar ist.

29. Band-Kassette von kompakter Größe nach Anspruch 28, wobei die Nockenfläche (24l) eine konvexe Nocken-Fläche umfaßt.

30. Band-Kassette von kompakter Größe nach Anspruch 25, wobei das Nocken-Mittel (24n, 24o) einen länglichen Vorsprung (24n), der einstückig mit einem oberen Teil der zweiten Sperr-Klinke (24a) ausgebildet ist und der in einer Richtung radial von der Abwickel-Nabe (6) nach außen hin verdickt ist, sowie eine runde Nocken-Fläche (24o) umfaßt, die an einem vorderen Ende des Vorsprunges (24n) gebildet ist, und die sich durchgängig zu einer Seitenfläche der zweiten Sperr-Klinke (24a) erstreckt, wobei die runde Nocken-Fläche (24o) eine Krümmung aufweist, die größer ist als die Breite eines Zahnzwischenraumes, zwischen jedem Paar von benachbarten Zähnen des zweiten Zahnrades (6c).

## Revendications

1. Cassette de forme compacte avec bande, comprenant un boîtier (3), des premier et second moyeux (7, 6) de bobines montés, de façon tournante, à l'intérieur du boîtier (3), une bande magnétique (2) étant enroulé autour des moyeux, et des premier et second mécanismes de freins (A, B) montés de façon tournante et associés auxdits premier et second moyeux (7, 6) de bobines, respectivement, pour bloquer lesdits premier et second moyeux (7, 6) de bobines en les empêchant de tourner par rapport audit boîtier (3) quand lesdits premier et second mécanismes (A, B) de freins sont dans des positions de freinage; caractérisée en ce que
ledit premier mécanisme de frein (A) comporte une partie d'entraînement (21d) et ledit second mécanisme de frein (B) comporte une partie entraînée (24b), espacée de ladite partie d'entraînement (21d) d'au moins une distance prédéterminée (u) quand lesdits premier et second mécanismes de frein (A, B) sont dans lesdites positions de freinage, et en ce que
lorsque ledit premier mécanisme de frein est libéré, ladite partie d'entraînement (21d) se déplace sur ladite distance prédéterminée (u) de manière à venir buter contre ladite partie entraînée (24b) afin de déplacer ladite partie entraînée (24b) pour libérer ledit second mécanisme de frein (B).

2. Cassette de forme compacte avec bande selon la revendication 1, dans laquelle ledit second moyeu (6) de bobine comporte une joue annulaire (6d), ledit premier moyeu (7) de bobine comportant une joue annulaire (7b), ledit premier mécanisme de frein (A) comprend une première denture (7a) formée sur la périphérie de ladite joue annulaire (7b) dudit premier moyeu (7) de bobine, un bras (21) de frein monté de façon pivotante à l'intérieur dudit boîtier (3), et un premier ressort (22) pour pousser ledit bras (21) de frein de manière qu'il tourne dans une première direction, ledit bras (21) de frein comportant un premier cliquet de blocage (21a) maintenu normalement en prise avec ladite première denture (7a) par la force dudit premier ressort (22) quand ledit premier mécanisme de frein se trouve dans ladite position de freinage, une première partie d'attaque (21b) pouvant venir porter contre un élément (23; 31) de libération de frein pour faire tourner ledit bras (21) de frein dans une seconde direction opposée à ladite première direction afin de dégager ledit cliquet de blocage (21a) de ladite première denture (7a), et un bras (21c) pour transmettre un mouvement angulaire dudit bras (21) de frein dans ladite seconde direction audit second mécanisme de frein (B), ledit bras (21c) comportant ladite partie d'entraînement à son extrémité distale, ledit second mécanisme de frein (B) comprenant une seconde denture (6c) formée sur la périphérie de ladite joue annulaire (6d) dudit moyeu (6) de bobine débitrice, un élément (24) de frein monté de façon pivotante à l'intérieur dudit boîtier, et un second ressort (25) pour pousser ledit élément (24) de frein de manière qu'il tourne dans ladite seconde direction, ledit élément (24) de frein comportant un second cliquet de blocage (24a) normalement maintenu en prise avec ladite seconde denture (6c) par la force dudit second ressort (25), quand ledit second mécanisme (3) de frein se trouve dans ladite position de freinage, ledit élément (24) de frein comportant ladite partie d'entraînement (24b) espacée de ladite partie d'entraînement d'au moins ladite distance prédéterminée (u) quand lesdits premier et second mécanismes de freins (A, B) se trouvent dans lesdites positions de freinage, ledit élément (24) de frein pouvant tourner dans ladite première direction pour dégager ledit second cliquet de blocage (24a) de ladite seconde denture (6c) quand le mouvement angulaire dudit bras (21) de frein dans ladite seconde direction est transmis à ladite partie entraînée (24b) par l'intermédiaire de ladite partie d'entraînement (21c) sur ladite distance prédéterminée (u).

3. Cassette de forme compacte avec bande selon la revendication 2, dans laquelle le bras (21) présente un bras de levier déterminé par le rapport d'une première distance (α) entre un axe de pivotement dudit bras (21) de frein et un point de contact entre ladite première partie d'attaque (21b) et ledit élément (23) de libération de frein, et une seconde distance (β) entre un axe de pivotement dudit bras (21) de frein et ladite extrémité distale dudit bras (21c), ledit rapport de la première à la seconde distance étant compris entre 1:6 et 1:12.

4. Cassette de forme compacte avec bande selon la revendication 2, 3 ou 4, dans laquelle ledit premier cliquet de blocage (21a) est profilé de telle sorte que la rotation dudit premier moyeu (7) de bobine, dans une première direction entraînant un relâchement de ladite bande magnétique (2), se trouve empêchée tout en permettant la rotation dudit premier moyeu (7) de bobine dans la direction opposée de manière à enrouler ladite bande magnétique (2) sur ledit premier moyeu (7) de bobine, ledit second cliquet de blocage (24a) étant profilé de telle sorte que la rotation dudit second moyeu (6) de bobine, dans une première direction entraînant un relâchement de ladite bande magnétique (2), est empêchée tout en permettant la rotation dudit second moyeu (6) de bobine dans la direction opposée de manière à enrouler ladite bande magnétique (2) sur ledit second moyeu (6) de bobine, ladite bande magnétique (2) étant maintenue sous tension entre ledit second moyeu (6) de bobine et ledit premier moyeu (7) de bobine.

5. Cassette de forme compacte avec bande selon l'une quelconque des revendications 2 à 4, dans laquelle ladite partie d'entraînement comprend un doigt d'actionnement (21d) à ladite extrémité distale dudit bras (21c).

6. Cassette de forme compacte avec bande selon l'une quelconque des revendications 2 à 5, dans laquelle ladite première partie d'attaque (21b) comporte une surface oblique (21e) pouvant venir porter contre ledit élément (23) de libération de frein, ledit élément (23) de libération de frein pouvant être déplacé dans une direction parallèle à l'axe de rotation dudit bras de frein (21).

7. Cassette de forme compacte avec bande selon l'une quelconque des revendications 2 à 6, dans lequel ledit premier moyeu (7) de bobine comporte, en outre, une seconde joue annulaire (7c) espacée de la joue annulaire (7b) mentionnée en premier, ledit premier mécanisme de frein (A) comprenant, en outre, une butée (21f) espacée normalement de la périphérie de ladite seconde joue annulaire (7c) par un espace libre (t) et pouvant venir en contact avec ladite périphérie de ladite seconde joue annulaire (7c) pour empêcher ledit premier cliquet de blocage (24a) de se déplacer jusque dans l'espace compris entre ladite seconde joue annulaire (7c) et ladite joue annulaire (7b) mentionnée en premier dudit premier moyeu (7) de bobine.

8. Cassette de forme compacte avec bande selon la revendication 7, dans laquelle ladite butée (21f) est formée sur ledit bras (21) de frein et est espacée verticalement dudit premier cliquet de blocage (24a) d'un pas (p) sensiblement égal à l'espacement (s) entre ladite seconde joue annulaire (7c) et ladite joue (7b) mentionnée en premier dudit premier moyeu (7) de bobine.

9. Cassette de forme compacte avec bande selon la revendication 7 ou 8, dans laquelle ledit espace libre (t) entre ladite butée (21f) et ladite périphérie de ladite seconde joue annulaire (7c) est compris entre 0,5 et 2 mm.

10. Cassette de forme compacte avec bande selon la revendication 9, dans lequel ledit espace libre (t) est compris entre 1 et 1,5 mm.

11. Cassette de forme compacte avec bande selon l'une quelconque des revendications 1 à 10, dans laquelle ledit second moyeu (6) comprend, en outre, une seconde joue annulaire (6e) espacée de la joue annulaire (6d) mentionnée en premier, ledit second mécanisme de frein (B) comprenant, en outre, une butée (24c) espacée normalement de la périphérie de ladite seconde joue annulaire (6e) par un espace libre (t) et pouvant venir en contact avec ladite périphérie de ladite seconde joue annulaire (6e) pour empêcher ledit second cliquet de blocage (24a) de se déplacer jusque dans l'espace compris entre ladite seconde joue annulaire (6e) et ladite joue annulaire (6c) mentionnée en premier dudit second moyeu (6) de bobine.

12. Cassette de forme compacte avec bande selon la revendication 11, dans laquelle ladite butée (24c) est formée sur ledit élément de frein (24) et est espacée verticalement dudit second cliquet de blocage (24a) d'un pas (p) sensiblement égal à l'espacement (s) entre ladite seconde joue annulaire (6e) et ladite joue annulaire (6d) mentionnée en premier dudit second moyeu (6) de bobine.

13. Cassette de forme compacte avec bande selon la revendication 11 ou 12, dans laquelle ledit espace libre (t) entre ladite butée (24c) et ladite périphérie de ladite seconde joue annulaire (6e) est compris entre 0,5 et 2 mm.

14. Cassette de forme compacte avec bande selon la revendication 13, dans lequel ledit espace libre (t) est compris entre 1 et 1,5 mm.

15. Cassette de forme compacte avec bande selon l'une quelconque des revendications 2 à 14, dans laquelle ledit élément de frein (24) comprend un moyen (24d) pour permettre une vérification et une correction de la position dudit élément (24) de frein par rapport audit boîtier (3).

16. Cassette de forme compacte avec bande selon la revendication 15, dans laquelle ledit moyen permettant une vérification et une correction de position comprend une fente (24d) s'étendant depuis l'extrémité supérieure dudit élément de frein (24), dans une mesure prédéterminée le long de l'axe de rotation dudit élément (24) de frein, afin de recevoir une pointe (30a) d'un outil (30) de vérification et de réglage.

17. Cassette de forme compacte avec bande selon la revendication 16, dans laquelle ladite fente (24d) comporte une extrémité (24e) évasée vers l'extérieur.

18. Cassette de forme compacte selon l'une quelconque des revendications 2 à 17, dans laquelle ledit bras (21) de frein et ledit élément (24) de frein comporte un corps cylindrique (24g), lesdits premier et second ressorts (22, 25) comprenant un ressort hélicoïdal travaillant à la torsion et monté de façon non serrée autour du corps cylindrique (24g) de celui correspondant desdits bras (21) de frein et élément (24) de frein, au moins l'un desdits bras (21) de frein et élément (24) de frein comprenant une pièce de retenue élastique (24f; 24h) pour supporter sur ce bras ou cet élément, dans plan perpendiculaire à l'axe longitudinal dudit corps cylindrique (24g), ledit ressort hélicoïdal (22, 25) travaillant à la torsion.

19. Cassette de forme compacte avec bande selon la revendication 18, dans lequel ladite pièce de retenue élastique comprend une pluralité de saillies (24f) espacées dans le sens de la circonférence et formées sur la surface périphérique extérieure dudit corps cylindrique (24g) de celui précité desdits bras (21) de frein et élément (24) de frein.

20. Cassette de forme compacte avec bande selon la revendication 18, dans lequel ladite pièce de retenue élastique comprend un épaulement (24h) formé sur la surface périphérique extérieure dudit corps cylindrique (24g) de celui précité desdits bras (21) de frein et élément (24) de frein .

21. Cassette de forme compacte avec bande selon l'une quelconque des revendications 2 à 20, dans laquelle ledit élément de libération de frein comprend un doigt extérieur (23) de libération de frein pouvant être déplacé dans une direction parallèle à l'axe de rotation dudit bras (21) de frein, et un levier (31) de libération monté de façon mobile à l'intérieur dudit boîtier (3) pour transmettre le mouvement dudit doigt (23) de libération de frein à ladite première partie d'attaque (21b) dudit bas (21) de frein afin de faire tourner ledit bras (21) de frein dans ladite seconde direction.

22. Cassette de forme compacte avec bande selon la revendication 21, dans laquelle ladite première partie d'attaque (21b) comporte une surface oblique (21e), ledit levier (31) de libération pouvant être déplacé dans une direction parallèle audit axe de rotation dudit bras (21) de frein et comportant une aile (31a) pouvant venir porter contre ledit doigt (23) de libération de frein, et une partie d'actionnement (31b) faisant corps avec ladite aile (31a) et pouvant venir porter contre ladite surface oblique (21e) de ladite première partie de contact (21b).

23. Cassette de forme compacte avec bande selon l'une quelconque des revendications 2 à 22, dans laquelle ledit boîtier (3) comprend une broche (7d) de bobine sur laquelle ledit premier moyeu (7) de bobine est monté de façon tournante, et ledit boîtier (3) ou ledit bras (21) de frein comporte un élément (32) d'arrêt de bras pour limiter le mouvement angulaire dudit bras (21) de frein dans ladite première direction de manière à maintenir ledit bras (21) de frein hors de contact avec ladite broche (7d) de bobine.

24. Cassette de forme compacte avec bande selon la revendication 23, dans laquelle ledit élément (32) d'arrêt de bras de frein comprend une saillie sur une partie dudit boîtier (3) et peut venir en contact avec ladite première partie d'attaque (21b) dudit bras de frein.

25. Cassette de forme compacte avec bande selon l'une quelconque des revendications 2 à 24, dans laquelle ledit second mécanisme (B) de frein comprend, en outre, un moyen formant came (24i, 24j; 24k, 24l; 24n, 24o) associé audit élément (24) de frein et pouvant venir en contact avec une partie dudit second moyeu (6) de bobine pour faire tourner ledit élément (24) de frein dans ladite première direction afin de libérer momentanément ledit second moyeu (6) de bobine quand ledit second moyeu (6) de bobine est soulevé.

26. Cassette de forme compacte avec bande selon la revendication 25, dans laquelle ledit moyen formant came (24i, 24j) comprend une saillie de forme allongée faisant corps avec une partie supérieure dudit second cliquet de blocage (24a) et comportant une surface (24j) de came s'étendant de façon contiguë à la surface latérale dudit second cliquet de blocage et inclinée vers le bas en direction de ladite joue annulaire (6d) dudit second moyeu (6) de bobine, ladite surface (24j) de came pouvant venir en contact, de façon coulissante, avec la périphérie de ladite joue annulaire (6d).

27. Cassette de forme compacte avec bande selon la revendication 26, dans laquelle ladite surface (24j) de came comprend une surface de came concave.

28. Cassette de forme compacte avec bande selon la revendication 25, dans laquelle ledit moyen formant came (24k, 24l) comprend une saillie (24k) de forme allongée, faisant corps avec ledit élément (24) de frein et s'étendant au-dessus dudit second cliquet (24a), et une surface (24l) de came, formée sur ladite saillie (24k) et inclinée vers le bas en direction dudit second moyeu (6) de bobine, ledit second moyeu (6) de bobine comportant une seconde joue annulaire (6e) disposée au-dessus ladite joue annulaire (6d) mentionnée en premier et pouvant venir en contact avec ladite surface (24l) de came se trouvant sur ladite saillie (24k).

29. Cassette de forme compacte avec bande selon la revendication 28, dans laquelle ladite surface (24l) de came comprend un surface de came convexe.

30. Cassette de forme compacte avec bande selon la revendication 25, dans laquelle ledit moyen formant came (24n, 24o) comprend une saillie (24n) de forme allongée, faisant corps avec une partie supérieure dudit second cliquet de blocage (24a) et s'agrandissant dans une direction radialement vers l'extérieur en sens opposé au moyeu (6) de bobine débitrice, et une surface arrondie (24o) de came formée sur l'extrémité avant de ladite saillie (24n) et s'étendant de façon contiguë jusqu'à la surface latérale dudit second cliquet de blocage (24a), ladite surface arrondie (24o) de came ayant une courbure plus grande que la largeur de la rainure se trouvant entre chaque paire de dents adjacentes de ladite seconde denture (6c).
